(19) Europäisches Patentamt
European Patent Office
Office européen des brevets

(11) EP 4 765 990 A1

(12) EUROPEAN PATENT APPLICATION
published in accordance with Art. 153(4) EPC

(43) Date of publication:
**24.06.2026 Bulletin 2026/26**

(21) Application number: **23948836.4**

(22) Date of filing: **15.08.2023**

(51) International Patent Classification (IPC):
***H04W 72/232*** *(2023.01)*

(52) Cooperative Patent Classification (CPC):
**H04W 72/232;** Y02D 30/70

(86) International application number:
**PCT/CN2023/113210**

(87) International publication number:
**WO 2025/035406 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **1FINITY INC.**
**Kawasaki-shi, Kanagawa 211-8588 (JP)**

(72) Inventors:
- **JIANG, Qinyan**
  **Beijing 100022 (CN)**
- **ZHANG, Lei**
  **Beijing 100022 (CN)**
- **WANG, Xin**
  **Beijing 100022 (CN)**

(74) Representative: **Haseltine Lake Kempner LLP**
**Cheapside House**
**138 Cheapside**
**London EC2V 6BJ (GB)**

# (54) INFORMATION SENDING METHOD AND APPARATUS, AND INFORMATION RECEIVING METHOD AND APPARATUS

(57) Embodiments of this disclosure provide an information transmission method and apparatus and a communication system. The method includes: receiving serving cell configuration information of a first cell, the serving cell configuration information comprising or not comprising a ninth higher layer parameter used to configure a first DCI format to comprise a first information field used for Scell dormancy indication, and/or the serving cell configuration information comprising or not comprising a tenth higher layer parameter used to configure a second DCI format to comprise a first information field used for Scell dormancy indication; and receiving the first DCI format and/or the second DCI format in the first cell, wherein the first DCI format is used to schedule a PDSCH of a cell, or multiple PDSCHs of multiple cells, each cell corresponding to a PDSCH respectively, and the second DCI format is used to schedule a PUSCH of a first cell, or multiple PUSCHs of multiple cells, each cell corresponding to a PUSCH respectively.

201

a terminal equipment receives serving cell configuration information of a first cell, the serving cell configuration information including or not including a ninth higher layer parameter used to configure a first DCI format to include a first information field used for Scell dormancy indication, and/or the serving cell configuration information including or not including a tenth higher layer parameter used to configure a second DCI format to include a first information field used for Scell dormancy indication

202

the terminal equipment receives the first DCI format and/or the second DCI format in the first cell, wherein the first DCI format is used for scheduling of one PDSCH in one cell, or multiple PDSCHs in multiple cells with one PDSCH per cell, and the second DCI format is used for scheduling of one PUSCH in one first cell, or multiple PUSCHs in multiple cells with one PUSCH per cell

Fig. 2



Processed by Luminess, 75001 PARIS (FR)

## Description

### Technical Field

This disclosure relates to the field of communication technologies.

### Background

New radio NR supports spectra in different frequency ranges. At present, it can be predicted that 5G will have more available spectra due to re-farming of frequency bands that are originally used in the previous generation networks. Wherein, for a low-frequency FR1 frequency band, available spectrum blocks may be more dispersed and bandwidths may be more narrow. On the other hand, for a frequency range FR2 frequency band and some frequency range FR1 frequency bands, as available spectra in the same frequency band will be wider, intra-band multi-carrier operations are necessary. Therefore, taking demands for different spectra into account, in order to improve network throughput and good coverage, it is necessary to ensure that these scattered spectrum or large bandwidth spectrum are used in a more efficient and flexible manner, such as by improving flexibility of scheduling data in multiple cells and spectrum/power efficiency.

In a current scheduling mechanism, for one downlink control information (DCI), scheduling a physical uplink shared channel PUSCH of a single cell or a physical downlink shared channel PDSCH of a single cell by it is only allowed/supported. Taking the above available scattered spectra or large bandwidth spectra into account, one mode is to further support scheduling PUSCHs or PDSCHs of multiple cells by the same scheduling DCI, so as to improve flexibility and efficiency and lower control overhead. Therefore, in Rel-18, one of the goals of multi-carrier enhancement is to support scheduling PUSCHs/PDSCHs of multiple cells by single DCI, wherein one cell is only scheduled with one PDSCH or PUSCH.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

With the carrier aggregation technology, a Pcell (primary cell) and an Scell (secondary cell) for bandwidth expansion may simultaneously transmit data to a terminal equipment, thereby enlarging system bandwidth and improving a data rate. However, as data streams are usually transmitted suddenly and intermittently when users access to the network, it will be resulted that even if an Scell has no data transmission, the terminal equipment has to continuously monitor a control channel of the Scell (such as a PDCCH), a PDCCH for scheduling the Scell (such as in a case of cross-carrier scheduling), or transmit and receive other channels or signals (such as some periodic or semi-persistent channels or signals), thus bringing more baseband power consumption to the terminal equipment. For this reason, an SCell dormant mode is introduced on the basis of an SCell active mode and an inactive mode, that is, when the SCell has no data transmission, by configuring a dormant BWP in the SCell, the terminal equipment does not have to monitor a PDCCH in the Scell or the dormant BWP, nor monitor a PDCCH for the Scell or the dormant BWP. At the same time, the terminal equipment does not receive or transmit some other channels or signals in the dormant BWP, such as a PDSCH/DL-SCH, a SRS, a PUSCH/UL-SCH, a CG-PUSCH, a RACH, and a PUCCH, etc., thereby saving power consumption of the terminal equipment. Meanwhile, this function also supports indicating via signaling to perform switch between a dormant BWP and a non-dormant BWP. When there is data transmission, it may quickly switch to an active state and quickly resume services.

In Rel-18 under discussion, in order to support scheduling multiple cells by single DCI, new DCI formats for respectively scheduling PUSCHs and scheduling PDSCHs will be introduced. Currently, it has been agreed that the DCI formats may further be used to indicate SCell dormancy, that is, indicate the Scell to perform switch between a dormant BWP and a non-dormant BWP. However, how to (support) indicate Scell dormancy by the DCI formats is not defined in existing standards.

In order to solve at least one of the above problems, embodiments of this disclosure provide an information transmission method, an information reception method and apparatuses thereof.

According to one aspect of the embodiments of this disclosure, there is provided an information transmission apparatus, applicable to a network device, the apparatus including:

a first transmitting unit configured to transmit serving cell configuration information of a first cell to a terminal equipment, the serving cell configuration information including or not including a ninth higher layer parameter used to configure a first DCI format to include a first information field used for Scell dormancy indication, and/or the serving cell configuration information including or not including a tenth higher layer parameter used to configure a second DCI format to include a first information field used for SCell dormancy indication,

and transmit the first DCI format and/or the second DCI format in the first cell to the terminal equipment, wherein the first DCI format is used for scheduling of one PDSCH in one cell, or multiple PDSCHs in multiple cells with one PDSCH per cell, and the second DCI format is used for scheduling of one PUSCH in one first cell, or multiple PUSCHs in multiple cells with one PUSCH per cell.

According to another aspect of the embodiments of this disclosure, there is provided an information reception apparatus, applicable to a terminal equipment, the apparatus including:

a first receiving unit configured to receive serving cell configuration information of a first cell, the serving cell configuration information including or not including a ninth higher layer parameter used to configure a first DCI format to include a first information field used for SCell dormancy indication, and/or the serving cell configuration information including or not including a tenth higher layer parameter used to configure a second DCI format to include a first information field used for Scell dormancy indication,
and receive the first DCI format and/or the second DCI format in the first cell, wherein the first DCI format is used for scheduling of one PDSCH in one cell, or multiple PDSCHs in multiple cells with one PDSCH per cell, and the second DCI format is used for scheduling of one PUSCH in one first cell, or multiple PUSCHs in multiple cells with one PUSCH per cell.

According to a further aspect of the embodiments of this disclosure, there is provided a communication system, including the terminal equipment as described in the one aspect and/or the network device as described in the other aspect.
An advantage of the embodiments of this disclosure exists in that (supporting) indicating Scell dormancy by DCI format which supports to schedule multiple cells by single DCI, and simultaneously scheduling cells or nonsimultaneously scheduling cells is also supported, thereby saving power consumption of the terminal equipment and improving resource efficiency while achieving multi-carrier enhancement.
With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.
Features that are described and/or illustrated with respect to one embodiment may be used in the same way or in a similar way in one or more other embodiments and/or in combination with or instead of the features of the other embodiments.
It should be emphasized that the term "comprise/comprising/include/including" when used in this specification is taken to specify the presence of stated features, integers, steps or components but does not preclude the presence or addition of one or more other features, integers, steps, components or groups thereof.

## Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.
The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:

FIG. 1 is schematic diagram of a communication system of embodiments of this disclosure;
FIG. 2 is a schematic diagram of an information reception method of embodiments of this disclosure;
FIG. 3 is a schematic diagram of cell configuration information in serving cell configuration information of the embodiments of this disclosure;
FIG. 4 is a schematic diagram of the cell configuration information in the serving cell configuration information of the embodiments of this disclosure;
FIG. 5 is a schematic diagram of an information transmission method of embodiments of this disclosure;
FIG. 6 is a schematic diagram of an information reception apparatus of embodiments of this disclosure;
FIG. 7 is a schematic diagram of an information transmission apparatus of embodiments of this disclosure;
FIG. 8 is a schematic diagram of a network device of embodiments of this disclosure; and

FIG. 9 is a schematic diagram of a terminal equipment of embodiments of this disclosure.

## Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" refers to, for example, an equipment accessing to a communication network and receiving network services via a network device, and may also be referred to as "terminal equipment (TE)". The terminal equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, a device to device (D2D) terminal, a machine to machine (M2M) terminal, and a terminal supporting sidelink communication, etc.

In the embodiments of this disclosure, existing services or services that may be implemented in the future may be performed between a network device and a terminal equipment. For example, such services may include but not limited to an enhanced mobile broadband (eMBB), massive machine type communication (mMTC), ultra-reliable and low-latency communication (URLLC), and vehicle to everything (V2X), etc.

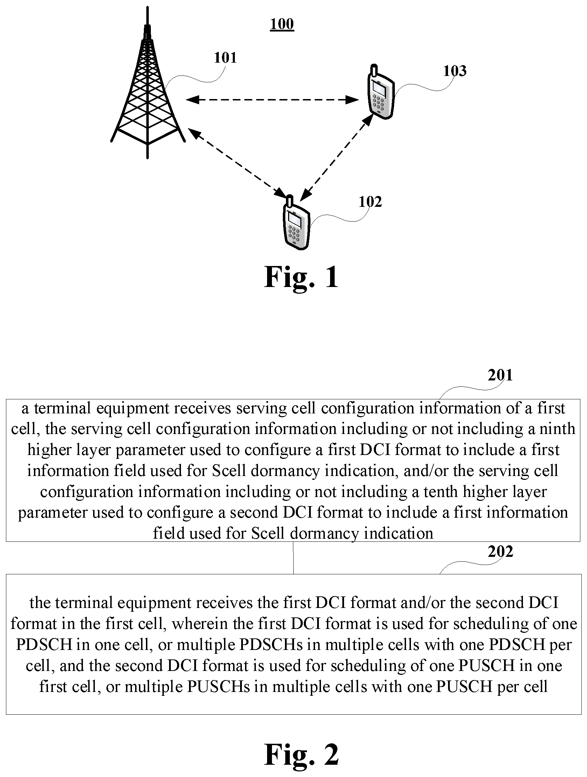

FIG. 1 is a schematic diagram of a communication system of embodiments of this disclosure, in which a case where terminal equipments and a network device are taken as examples is schematically shown. As shown in FIG. 1, the communication system 100 may include a network device 101 and terminal equipments 102, 103. For the sake of simplicity, an example having only two terminal equipments and one network device is schematically given in FIG. 1; however, the embodiments of this disclosure is not limited thereto.

In the embodiments of this disclosure, existing services or services that may be implemented in the future may be performed between the network device 101 and the terminal equipments 102, 103. For example, such services may include but not limited to an enhanced mobile broadband (eMBB), massive machine type communication (mMTC), and ultra-reliable and low-latency communication (URLLC), etc.

The terminal equipment 102 may transmit data to the network device 101, such as in a granted or grant-free transmission manner. The network device 101 may receive data transmitted by one or more terminal equipments 102 and feed back information to the terminal equipment 102, such as acknowledgement (ACK)/non-acknowledgement (NACK) information. According to the feedback information, the terminal equipment 102 may acknowledge end of a transmission process, or may perform new data transmission, or may perform data retransmission.

It should be noted that FIG. 1 shows that two terminal equipments 102, 103 are both in coverage of the network device 101. However, this disclosure is not limited thereto, and the two terminal equipments 102, 103 may not be in coverage of the network device 101, or one terminal equipment 102 is in coverage of the network device 101 and the other terminal equipment 103 is out of coverage of the network device 101.

In the embodiments of this disclosure, higher layer signaling may be, for example, radio resource control (RRC) signaling; for example, the RRC signaling includes an RRC message, which includes a master information block (MIB), system information, and a dedicated RRC message, or an RRC information element (RRC IE); or an RRC message or an information field included in an RRC information element (or an information field included in information fields). Higher layer signaling may also be, for example, a medium access control (MAC) signaling, or an MAC control element (MAC CE); however, this disclosure is not limited thereto.

In the embodiments of this disclosure, multiple means at least two, or two or more than two, "ID" and "index are interchangeable.

In the embodiments of this disclosure, "predefined" means defined in a protocol or determined according to a rule defined in a protocol, without needing additional configuration. Configuration/indication (interchangeable in some cases) refer(s) to configuring/indicating directly or indirectly by a network device via higher layer signaling and/or physical layer signaling. The physical layer signaling refers to, for example, control information (DCI) carried by a physical control channel or control information carried by a sequence; however, it is not limited thereto, and configuration/indication may be performed by introducing higher layer parameters into higher layer signaling. For example, information fields (or information fields included in information fields) included in an RRC IE or an RRC message or and RRC information element may also be referred to as higher layer parameters; however, this disclosure is not limited thereto.

Various embodiments of this disclosure shall be described below with reference to the accompanying drawings. These embodiments are illustrative only, and are not intended to limit this disclosure.

Embodiments of a first aspect

The embodiments of this disclosure provide an information reception method, which shall be described from a terminal equipment side.

FIG. 2 is a schematic diagram of the information reception method of the embodiments of this disclosure. As shown in FIG. 2, the method includes:

201: a terminal equipment receives serving cell configuration information of a first cell, the serving cell configuration information including or not including a ninth higher layer parameter used to configure a first DCI format to include a first information field used for Scell dormancy indication, and/or the serving cell configuration information including or not including a tenth higher layer parameter used to configure a second DCI format to include a first information field used for Scell dormancy indication; and

202: the terminal equipment receives the first DCI format and/or the second DCI format in the first cell, wherein the first DCI format is used for scheduling of one PDSCH in one cell, or multiple PDSCHs in multiple cells with one PDSCH per cell, and the second DCI format is used for scheduling of one PUSCH in one first cell, or multiple PUSCHs in multiple cells with one PUSCH per cell.

It should be noted that FIG. 2 only schematically illustrates the embodiments of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 2.

In some embodiments, the first DCI format is DCI format 1_3, and the second DCI format is DCI format 0_3. A DCI format in the following description may be replaced with DCI or DCI in a DCI format. A CRC of the first DCI format and/or the second DCI format is scrambled by a C-RNTI or an MCS-C-RNTI.

In some embodiments, the terminal equipment may be configured to monitor/receive the first DCI format and/or the second DCI format on one or more cells. This cell, for example, is referred to as a first cell.

In some embodiments, the serving cell configuration information (ServingCellConfig) is used for configuring (adding or modifying) a serving cell for the terminal equipment. The serving cell may be an SpCell (or a primary cell, i.e. a Pcell or a PScell) or an SCell of an MCG or an SCG. The serving cell configuration information of the first cell includes an eighth higher layer parameter for configuring the terminal equipment to monitor and/or receive the first DCI format and/or the second DCI format in the first cell. For example, the eighth higher layer parameter is included in search space information (SearchSpace) in the serving cell configuration information. That is, whether the terminal equipment monitors DCI format 1_3 and/or DCI format 0_3 in the first cell is configured per SearchSpace. For example, for a UE-specific search space (i.e. USS) configured by SearchSpace, the terminal equipment may be configured to monitor DCI format 1_3 and/or DCI format 0_3 in the SearchSpace. Search space(s) used to monitor DCI format 1_3 or DCI format 0_3 may be identical or different. Wherein, the search space information is, for example, configured per BWP, that is, it is included in BWP configuration information.

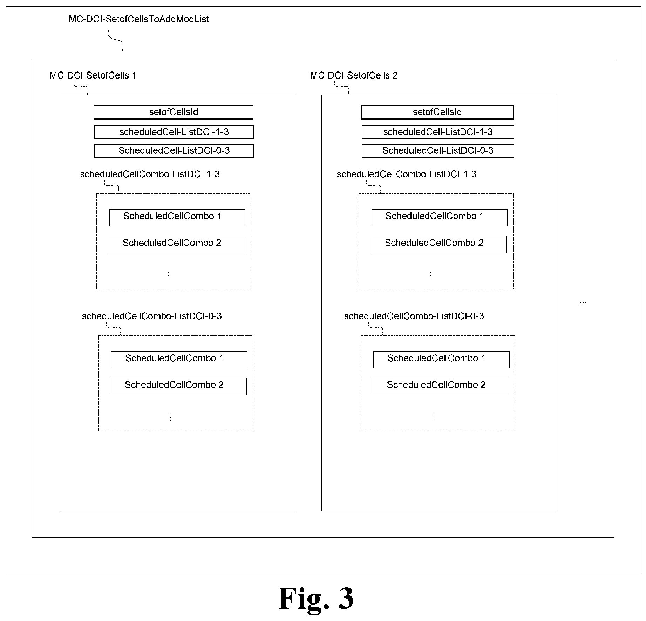

In some embodiments, the serving cell configuration information of the first cell includes an eleventh higher layer parameter (e.g. MC-DCI-SetofCellsToAddModList) used for configuring a list of cell set, the eleventh higher layer parameter including one or more twelfth higher layer parameters (e.g. MC-DCI-SetofCells) used for configuring a cell set, and one twelfth higher layer parameter including a thirteenth higher layer parameter (e.g. setofCellsID) for configuring an ID of a cell set, including or not including information (ScheduledCell-ListDCI-1-3, a first higher layer parameter) for configuring a (scheduled) cell list for the first DCI format, including or not including information (ScheduledCell-ListDCI-0-3, a second higher layer parameter) for configuring a (scheduled) cell list for the second DCI format, including or not including information (scheduledCellCombo-ListDCI-1-3, a third higher layer parameter) for configuring a cell combination list for the first DCI format, including or not including information (scheduledCellCombo-ListDCI-0-3, a fourth higher layer parameter) for configuring a (scheduled) cell combination list for the second DCI format. The third higher layer parameter and the fourth higher layer parameter respectively include a fourteenth higher layer parameter (e.g. ScheduledCellCombo) (entry) for configuring a cell combination, information of the cell combination corresponding to the first DCI format or the second DCI format, as shown in FIG. 3.

In some embodiments, a higher layer parameter used to configure a list (such as the eleventh higher layer parameter, the first higher layer parameter, the second higher layer parameter, the third higher layer parameter, and the fourth higher layer parameter) includes another higher layer parameter used for configuring the list, which may also be referred to as an entry.

In some embodiments, the first DCI format is used to schedule PDSCH(s) in one or more cells (in the first cell set), the second DCI format is used to schedule PUSCH(s) in one or more cells (in the second cell set), the first cell set is configured by the first higher layer parameter (that is, the first cell set includes cells in the cell list configured by the first higher layer parameter), and the second cell set is configured by the second higher layer parameter (that is, the second cell set includes cells in the cell list configured by the second higher layer parameter), wherein being used to schedule means supporting scheduling or may schedule, in which actual scheduling is performed or not.

In some embodiments, for a first cell (or in serving cell configuration information of a first cell), at most four cell sets may be configured (a cell set includes a first cell set and/or a second cell set), that is, the above eleventh higher layer parameter includes at most four twelfth higher layer parameters or entries. A value range of the cell set ID configured by the thirteenth higher layer parameter is 0,1,2,3 or 1,2,3,4.

In some embodiments, a twelfth higher layer parameter includes the above first higher layer parameter and/or second higher layer parameter. When the terminal equipment is configured to monitor the first DCI format in the first cell, the eleventh higher layer parameter includes at least one twelfth higher layer parameter including the first higher layer parameter. When the terminal equipment is configured to monitor the second DCI format in the first cell, the eleventh higher layer parameter includes at least one twelfth higher layer parameter including the second higher layer parameter.

In some embodiments, the first higher layer parameter and the second higher layer parameter respectively indicate the cell lists (or the first cell set and the second cell set) for the first DCI format and the second DCI format by indicating a serving cell index of the cell.

In some embodiments, a first cell set and a second cell set respectively include at most four cells. For example, the first higher layer parameter and the second higher layer parameter indicate respectively at least two and at most four (that is, two to four) serving cell indices. Thus, cells corresponding to indicated serving cell indices respectively belong to the first cell set and the second cell set.

In some embodiments, cell sets (including the first cell set and/or the second cell set) configured by different twelfth higher layer parameters include (completely) different cells, that is, there exists no intersection therebetween.

In some embodiments, cells included in the first cell set and the second cell set in the same cell set (that is, the first cell set configured by the first higher layer parameter and the second cell set configured by the second higher layer parameter in the same twelfth higher layer parameter) are (completely) identical or (completely/partially) different.

In some embodiments, the first higher layer parameter and the second higher layer parameter indicate cells in an ascending order of the serving cell indices, and/or cells in the first cell set and the second cell set are respectively mapped in an ascending order of the serving cell indices to indices (e.g. 0,1,2,3).

In some embodiments, one third higher layer parameter and one fourth higher layer parameter are respectively configured with at least two fourteenth higher layer parameters (or at least two entries).

In some embodiments, the cell combination list configured by the third higher layer parameter and/or the cell combination list for the first DCI format is/are referred to as, first cell combination list(s), cell combinations in this list (that is, the cell combinations configured by the fourteenth higher layer parameter in the third higher layer parameter) being referred to as first cell combinations. The cell combination list configured by the fourth higher layer parameter and/or the cell combination list for the second DCI format is/are referred to as, for example, second cell combination list(s), cell combinations in this list (that is, the cell combinations configured by the fourteenth higher layer parameter in the fourth higher layer parameter) being referred to as second cell combinations.

In some embodiments, the fourteenth higher layer parameter indicates cells included in a cell combination based on second indices of cells in a corresponding first cell set or second cell set. For example, a fourteenth higher layer parameter included in the third higher layer parameter indicates cells included in a first cell combination based on second indices of cells in the first cell set configured by the first higher layer parameter in the same twelfth higher layer parameter, and a fourteenth higher layer parameter included in the fourth higher layer parameter indicates cells included in a second cell combination based on second indices of cells in the second cell set configured by the second higher layer parameter in the same twelfth higher layer parameter.

In some embodiments, the first cell is a Pcell or a PScell or a primary cell or an SpCell or a PUCCH Scell or an Scell. The first cell is a scheduling cell, and is used to transmit the first DCI format and/or the second DCI format for scheduling the first cell and/or other cells.

In some embodiments, an Scell is configured or not configured with a dormant BWP and/or a dormancy group ID.

In some embodiments, a primary cell or PUCCH SCell is not configured with a dormant BWP and/or a dormancy group ID; however, it is not limited thereto.

In some embodiments, for a cell (such as an Scell; however, it is not limited thereto), its corresponding serving cell configuration information may or may not include a fifth higher layer parameter (e.g. DormantBWP-Config-r16, or dormantBWP-Id) used for configuring a dormant BWP (or for configuring a dormant BWP ID) (for example, it indicates an ID of a BWP in the cell that serves as a dormant BWP), and/or a sixth higher layer parameter (e.g. firstWithinActiveTimeBWP-Id-r16) used to configure an ID of a BWP to be activated when a DCI indication for SCell dormancy is received within an activation time (the DCI indicates the terminal equipment to a non-dormant BWP, such as leaving the SCell dormancy), and/or a seventh higher layer parameter (e.g. dormancyGroupWithinActiveTime-r16) used to indicate an ID of an SCell group (or dormancy group) (dormant within the activation time) to which the cell belongs (for those sleeping during the activation time) the group, which includes, for example, a fifteenth higher layer parameter (e.g. DormancyGroupID-r16) used for configuring a dormancy group ID. In some embodiments, the terminal equipment does not need to monitor PDCCHs on the Scell or on the dormant BWP, nor does it need to monitor PDCCHs for the Scell or the dormant BWP, meanwhile, the terminal equipment does not receive or transmit some other channels or signals on the dormant BWP, such as a PDSCH/DL-SCH, a SRS, a PUSCH/UL-SCH, a CG-PUSCH, a RACH, and a PUCCH, etc., but when it is configured, the terminal proceeds with performing measurement of channel state information (CSI), automatic gain control (AGC) and beam management (according to the configuration), such as performing beam failure detection for the Scell and performing beam failure recovery when a beam failure is detected.

For each activated SCell configured with a dormant BWP and/or a dormancy group ID, the terminal equipment enters or leaves the dormant BWP of the SCell via BWP switch. For example, for an activated SCell above, when it is indicated to enter the dormant BWP (that is, it is indicated that the activated BWP is a dormant BWP), a DL BWP configured/provided by *dormantBWP-Id* is activated, and when it is indicated to leave the dormant BWP (that is, it is indicated that the activated BWP is a dormant BWP), a DL BWP configured/provided by *firstWithinActiveTimeBWP-Id* is activated.

In some embodiments, the serving cell configuration information of the first cell or a twelfth higher layer parameter in the eleventh higher layer parameter therein may or may not include (exist or not exist) a ninth higher layer parameter (domancyDCI-1-3) and/or a tenth higher layer parameter (domancyDCI-0-3), the ninth higher layer parameter being used to indicate that the first DCI format includes the first information field, and the tenth higher layer parameter being used to indicate that the second DCI format includes the first information field. For example, if the serving cell configuration information or the eleventh higher layer parameter includes the ninth higher layer parameter, the first DCI format transmitted (by the network device)/received (by the terminal equipment) on the first cell may include the first information field. For another example, if at least one twelfth higher layer parameter in the eleventh higher layer parameter includes the ninth higher layer parameter, the first DCI format transmitted/received on the first cell (may) includes the first information field. For a further example, if at least one twelfth higher layer parameter in the eleventh higher layer parameter includes the ninth higher layer parameter, the first DCI format transmitted/received on the first cell (may) includes the first information field in scheduling cells in the first cell set (i.e. the first cell set configured by the first higher layer parameter in the twelfth higher layer parameter) corresponding to the twelfth higher layer parameter, and if a twelfth higher layer parameter in the eleventh higher layer parameter does not include the ninth higher layer parameter, the first DCI format transmitted/received on the first cell does not include (may not include) the first information field in scheduling cells in the first cell set corresponding to the twelfth higher layer parameter. If the serving cell configuration information or the eleventh higher layer parameter includes the tenth higher layer parameter, the second DCI format transmitted (by the network device)/received (by the terminal equipment) on the first cell (may) includes the first information field. For still another example, if at least one twelfth higher layer parameter in the eleventh higher layer parameter includes the tenth higher layer parameter, the second DCI format transmitted/received on the first cell (may) includes the first information field. For yet another example, if a twelfth higher layer parameter in the eleventh higher layer parameter includes the tenth higher layer parameter, the second DCI format transmitted/received on the first cell (may) includes the first information field in scheduling cells in the first cell set (i.e. the first cell set configured by the second higher layer parameter in the twelfth higher layer parameter) corresponding to the twelfth higher layer parameter, and if a twelfth higher layer parameter in the eleventh higher layer parameter does not include the tenth higher layer parameter, the second DCI format transmitted/received on the first cell does not include (may not include) the first information field in scheduling cells in the second cell set corresponding to the twelfth higher layer parameter. In some embodiments, the first information fields in the first DCI format and the second DCI format are (may be) only present when DCI format is carried by a Pcell and/or a PScell and/or an SpCell and/or a primary cell and/or a PUCCH Scell and/or an SCell that is not configured a dormant BWP and/or a dormancy group ID and/or a cell that is not configured with a dormant BWP and/or a dormancy group ID and/or a PDCCH in a discontinuous reception (DRX) activation time, and/or present only when the terminal equipment is configured with at least two DL BWPs for an Scell.

Presence(s) of the ninth higher layer parameter and/or the tenth higher layer parameter in the serving cell configuration information of the first cell shall be described below.

In some embodiments, the ninth higher layer parameter and/or the tenth higher layer parameter is/are optionally present or not present.

In some embodiments, the first cell is a Pcell and/or a PScell and/or an SpCell and/or a primary cell and/or a PUCCH Scell and/or an Scell that is not configured with a dormant BWP and/or a dormancy group ID and/or a cell that is not configured with a dormant BWP and/or a dormancy group ID, and the ninth higher layer parameter and/or the tenth higher layer parameter is/are optionally present.

In some embodiments, the first cell is not a Pcell and/or a PScell and/or an SpCell and/or a primary cell and/or a PUCCH Scell and/or an Scell that is not configured with a dormant BWP and/or a dormancy group ID and/or a cell that is not configured with a dormant BWP and/or a dormancy group ID, and the ninth higher layer parameter and/or the tenth higher layer parameter is/are not present. The above being not configured a dormant BWP and/or dormancy group ID refers to being not configured with/provided the fifth higher layer parameter and/or the sixth higher layer parameter and/or the seventh higher layer parameter and/or the fifteenth higher layer parameter (that the serving cell configuration information does not include/exist/provide the fifth higher layer parameter and/or the sixth higher layer parameter and/or the seventh higher layer parameter and/or the fifteenth higher layer parameter).

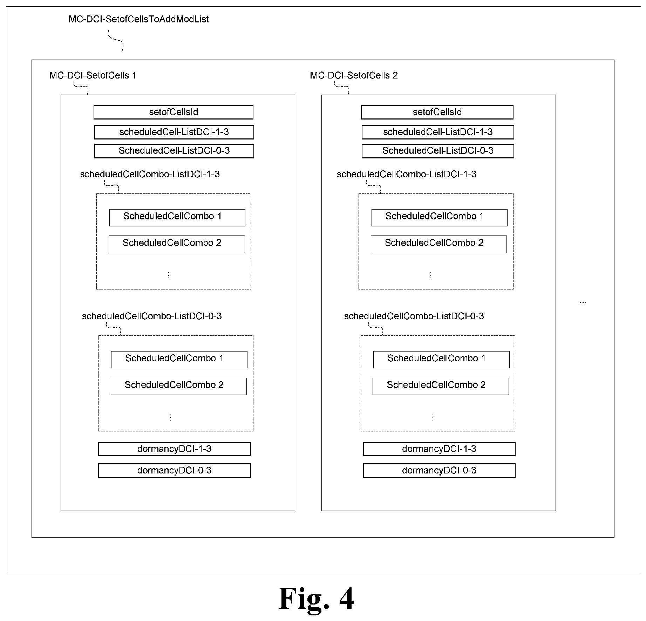

Example 1: for a Pcell and/or a PScell and/or an SpCell and/or a primary cell and/or a PUCCH SCell and/or an SCell that is not configured with a dormant BWP and/or a dormancy group ID and/or a cell that is not configured with a dormant BWP and/or a dormancy group ID, the ninth higher layer parameter and/or the tenth higher layer parameter is/are optionally present; otherwise, it/they is/are not present. For example, if the ninth higher layer parameter and/or the tenth higher layer parameter are optionally present, it/they will be included in cell set configuration information, as shown in FIG. 4.

Instance 1: in a serving cell configuration of an SpCell/primary cell (e.g. including a Pcell and/or a PScell) (or for an SpCell/primary cell (e.g. including a Pcell and/or a Pscell)), the ninth higher layer parameter and/or the tenth higher layer parameter is/are optionally present; otherwise, it/they is/are not present. In other words, the first cell is not an SpCell/-primary cell, and the ninth higher layer parameter and/or the tenth higher layer parameter is/are not present; otherwise, it/they is/are optionally present.

Instance 2: in a serving cell configuration of an SpCell/primary cell (e.g. including a Pcell and/or a PScell) or a PUCCH Scell (or for an SpCell/primary cell (e.g. including a Pcell and/or a Pscell or a PUCCH Scell)), the ninth higher layer parameter and/or the tenth higher layer parameter is/are optionally present; otherwise, it/they is/are not present. In other words, the first cell is not an SpCell/primary cell (e.g. including a Pcell and/or a PScell) or a PUCCH Scell, and the ninth higher layer parameter and/or the tenth higher layer parameter is/are not present; otherwise, it/they is/are optionally present.

Instance 3: in a serving cell configuration of an SpCell/primary cell or an SpCell not configured with/provided a dormant BWP and/or a dormancy group ID (or for a serving cell configuration of an SpCell/primary cell or an SCell not configured with/provided a dormant BWP and/or a dormancy group ID), the ninth higher layer parameter and/or the tenth higher layer parameter is/are optionally present; otherwise, it/they is/are not present. In other words, the first cell is not an SpCell/primary cell or an SCell not configured with/provided a dormant BWP and/or a dormancy group ID, and the ninth higher layer parameter and/or the tenth higher layer parameter is/are not present; otherwise, it/they is/are optionally present.

Instance 4: in a serving cell configuration of a cell not configured with/provided a dormant BWP and/or a dormancy group ID (or for a serving cell configuration of a cell not configured with/provided a dormant BWP and/or a dormancy group ID), the ninth higher layer parameter and/or the tenth higher layer parameter is/are optionally present; otherwise, it/they is/are not present. In other words, the first cell is not a cell not configured with/provided a dormant BWP and/or a dormancy group ID, and the ninth higher layer parameter and/or the tenth higher layer parameter is/are not present; otherwise, it/they is/are optionally present.

Instance 5: in a serving cell configuration of a cell that does not have/include the fifth higher layer parameter and/or the sixth higher layer parameter and/or the seventh higher layer parameter and/or the fifteenth higher layer parameter (or, if the fifth higher layer parameter and/or the sixth higher layer parameter and/or the seventh higher layer parameter and/or the fifteenth higher layer parameter do(es) not exist/is/are not included), the ninth higher layer parameter and/or the tenth higher layer parameter is/are optionally present; otherwise, it/they is/are not present. (On the contrary, that is, in the serving cell configuration of the cell that has/includes the fifth higher layer parameter and/or the sixth higher layer parameter and/or the seventh higher layer parameter and/or the fifteenth higher layer parameter, the ninth higher layer parameter and/or the tenth high is/are not present; otherwise, it/they is/are optionally present.)

Example 2: for a cell set with a corresponding first cell is a Pcell and/or a PScell and/or an SpCell and/or a primary cell and/or a PUCCH Scell and/or an Scell that is not configured with a dormant BWP and/or a dormancy group ID and/or a cell that is not configured with a dormant BWP and/or a dormancy group ID and/or for the cell set including a first cell (that is, a first cell to which the cell set corresponds (i.e. a scheduling cell for scheduling cells in the cell set) that is the above first cell and/or a corresponding first cell that the cell set includes (i.e. including a scheduling cell for scheduling cells in the cell set)), the ninth higher layer parameter and/or the tenth higher layer parameter is/are optionally present; otherwise, it/they is/are not present. For example, if the ninth higher layer parameter and/or the tenth higher layer parameter are present, it/they will be included in cell set configuration information, as shown in FIG. 4.

Instance 1: in a cell set configuration (MC-DCI-SetofCells) of a cell set scheduled by an SpCell/primary cell and/or including an SpCell/primary cell (or a cell set scheduled for an SpCell/primary cell and/or including an SpCell/primary cell), the ninth higher layer parameter and/or the tenth higher layer parameter is/are optionally present; otherwise, it/they is/are not present. In other words, in a cell set configuration (MC-DCI-SetofCells) of a cell set not scheduled by an SpCell/primary cell and/or not including a Pcell and/or a Pscell (or a cell set not scheduled for an SpCell/primary cell and/or not including an SpCell/primary cell), the ninth higher layer parameter and/or the tenth higher layer parameter is/are not present; otherwise, it/they is/are optionally present.

Instance 2: in a cell set configuration (MC-DCI-SetofCells) of a cell set scheduled by an SpCell/primary cell or a PUCCH Scell and/or including an SpCell/primary cell or a PUCCH Scell (or a cell set scheduled for an SpCell/primary cell or a PUCCH Scell and/or including an SpCell/primary cell or a PUCCH Scell), the ninth higher layer parameter and/or the tenth higher layer parameter is/are optionally present; otherwise, it/they is/are not present. Or, in other words, in a cell set configuration (MC-DCI-SetofCells) of a cell set not scheduled by an SpCell/primary cell or a PUCCH Scell and/or not including an SpCell/primary cell or a PUCCH Scell, the ninth higher layer parameter and/or the tenth higher layer parameter is/are not present; otherwise, it/they is/are optionally present.

Instance 3: in a cell set configuration (MC-DCI-SetofCells) of a cell set scheduled by an SpCell/primary cell or a PUCCH Scell or an Scell not configured with a dormant BWP and/or a dormancy group ID and/or including an SpCell/primary cell or a PUCCH Scell or an Scell not configured with a dormant BWP and/or a dormancy group ID (or, in other words, for a cell set scheduled by an SpCell/primary cell or a PUCCH Scell or an Scell not configured with a dormant BWP and/or a dormancy group ID and/or including an SpCell/primary cell or a PUCCH Scell or an Scell not configured with a dormant BWP and/or a dormancy group ID), the ninth higher layer parameter and/or the tenth higher layer parameter is/are optionally present; otherwise, it/they is/are not present. Or, in other words, in a cell set configuration of a cell set not scheduled by an SpCell/primary cell or a PUCCH Scell or an Scell not configured with a dormant BWP and/or a dormancy group ID and/or not including an SpCell/primary cell or a PUCCH Scell or an Scell not configured with a dormant BWP and/or a dormancy group ID, the ninth higher layer parameter and/or the tenth higher layer parameter is/are not present; otherwise, it/they is/are optionally present.

Instance 4: in a cell set configuration (MC-DCI-SetofCells) of a cell set scheduled by a cell not configured with a dormant BWP and/or a dormancy group ID and/or including a cell not configured with a dormant BWP and/or a dormancy group ID (or, in other words, for a cell set scheduled by a cell not configured with a dormant BWP and/or a dormancy group ID or the cell not configured with a dormant BWP and/or a dormancy group ID and/or including an Scell of a cell not configured with a dormant BWP and/or a dormancy group ID), the ninth higher layer parameter and/or the tenth higher layer parameter is/are optionally present; otherwise, it/they is/are not present. Or, in other words, in a cell set configuration for a cell set not scheduled by a cell not configured with a dormant BWP and/or a dormancy group ID or the cell not configured with a dormant BWP and/or a dormancy group ID and/or not including a cell or a cell not configured with a dormant BWP and/or a dormancy group ID, the ninth higher layer parameter and/or the tenth higher layer parameter is/are not present; otherwise, it/they is/are optionally present.

Instance 5: in a cell set configuration (MC-DCI-SetofCells) of a cell set scheduled by an SpCell/primary cell or an SCell not configured/provided with the fifth higher layer parameter and/or the sixth higher layer parameter and/or the seventh higher layer parameter and/or the fifteenth higher layer parameter and/or including an SpCell/primary cell or an SCell not configured with the fifth higher layer parameter and/or the sixth higher layer parameter and/or the seventh higher layer parameter and/or the fifteenth higher layer parameter (or, in other words, for a cell set scheduled by an SpCell/primary cell or an SCell not configured/provided with the fifth higher layer parameter and/or the sixth higher layer parameter and/or the seventh higher layer parameter and/or the fifteenth higher layer parameter and/or including an SpCell/primary cell or an SCell not configured with the fifth higher layer parameter and/or the sixth higher layer parameter and/or the seventh higher layer parameter and/or the fifteenth higher layer parameter), the ninth higher layer parameter and/or the tenth higher layer parameter is/are optionally present; otherwise, it/they is/are not present. Or, in other words, in a cell set configuration of a cell set not scheduled by an SpCell/primary cell or an SCell not configured/provided with the fifth higher layer parameter and/or the sixth higher layer parameter and/or the seventh higher layer parameter and/or the fifteenth higher layer parameter and/or not including an SpCell/primary cell or an SCell not configured/provided with the fifth higher layer parameter and/or the sixth higher layer parameter and/or the seventh higher layer parameter and/or the fifteenth higher layer parameter, the ninth higher layer parameter and/or the tenth higher layer parameter is/are not present; otherwise, it/they is/are optionally present.

Example 3: the ninth higher layer parameter and/or the tenth higher layer parameter is/are optionally present.

In some embodiments, when the first cell is a PUCCH cell or an Scell, the serving cell configuration information of the first cell does not include the ninth higher layer parameter and/or the tenth higher layer parameter, or the ninth higher layer parameter and/or the tenth higher layer parameter included in the serving cell configuration information of the first cell is/are ignored by the terminal equipment. In other words, when the first cell is a PUCCH cell or an Scell, the first DCI format and/or the second DCI format does/do not include the first information field, and the first DCI format and/or the second DCI format does/do not indicate SCell dormancy, or, the first information field is unable to be used to indicate SCell dormancy.

In some embodiments, the ninth higher layer parameter and/or the tenth higher layer parameter is/are included in search space information in the serving cell configuration information or cross-carrier scheduling configuration information (such as CrossCarrierScheduleingConfig).

For the convenience of description, various information fields in the first DCI format and/or the second DCI format shall first be described below.

In some embodiments, the first DCI format and/or the second DCI format include(s) the second information field, include(s) or does/do not include the first information field and/or the third information field and/or the fourth information field, and include(s) or does/do not include one or more fifth information fields. Times of including and not including shall be described subsequent embodiments.

In some embodiments, the second information field (frequency domain resource assignment) is used to indicate frequency domain resource assignment.

For example, for the first DCI format, the frequency domain resource assignment domain includes $N_{cell}^{DL}$ information blocks, information block 1, information block 2,..., and information block $N_{cell}^{DL}$; where, $N_{cell}^{DL}$, for example, is/is equal to the number of scheduled first cell combinations or the number of cells in the scheduled first cell set, wherein the scheduled first cell combinations are indicated by the third information field in the first DCI format or configured by the third higher layer parameter (when the first DCI format does not include the third information field), and the scheduled first cell set is indicated by the fourth information field in the first DCI format or configured by the first higher layer parameter (when the first DCI format does not include the fourth information field). For example, when a (corresponding) first cell combination list (or a third higher layer parameter) is not configured (for the scheduled first cell set), $N_{cell}^{DL}$ is equal to the number of cells in the scheduled first cell set, and when a (corresponding) first cell combination list (or a third higher layer parameter) is configured (for the scheduled first cell set), $N_{cell}^{DL}$ is equal to the number of cells in the scheduled first cell combinations; however, it is not limited thereto. Wherein, each information block corresponds to frequency domain resource assignmentof one cell (in $N_{cell}^{DL}$ cells), and the information blocks are arranged in an ascending order of cell indices (such as the above serving cell index and/or the second index) (of the cells in the scheduled first cell combinations or the scheduled first cell set). For example, information block 1 (a first one of information blocks) corresponds to frequency domain resource assignment for a cell with a smallest cell index, and information block 2 (a second one of information blocks) corresponds to frequency domain resource assignment for a cell with a secondarily smallest cell index, and so on.

For example, for the second DCI format, the frequency domain resource assignment domain includes $N_{cell}^{UL}$ information blocks, information block 1, information block 2,..., and information block $N_{cell}^{UL}$; where, $N_{cell}^{UL}$, for example, is/is equal to the number of cells in the scheduled second cell combinations or the number of cells in the scheduled second cell set, wherein the scheduled second cell combinations are indicated by the third information field in the second DCI format or configured by the fourth higher layer parameter (when the first DCI format does not include the third information field), and the scheduled second cell set is indicated by the fourth information field in the second DCI format or configured by the second higher layer parameter (when the first DCI format does not include the fourth information field). For example, when a (corresponding) second cell combination list (or a fourth higher layer parameter) is not configured (for the scheduled second cell set), $N_{cell}^{UL}$ is equal to the number of cells in the scheduled second cell set, and when a (corresponding) second cell combination list (or a fourth higher layer parameter) is configured (for the scheduled second cell set), $N_{cell}^{UL}$ is equal to the number of cells in the scheduled second cell combinations; however, it is not limited thereto. Wherein, each information block corresponds to frequency domain resource assignment of one cell (in $N_{cell}^{UL}$ cells), and the information blocks are arranged in an ascending order of cell indices (such as the above serving cell index and/or the second index) (of the cells in the scheduled second cell combinations or the scheduled second cell set). For example, information block 1 (a first one of information blocks) corresponds to frequency domain resource assignment for a cell with a smallest cell index, and information block 2 (a second one of information blocks) corresponds to frequency domain resource assignment for a cell with a secondarily smallest cell index, and so on.

For example, if the information (e.g. the third higher layer parameter ScheduledCellCombo-ListDCI-1-3) for configuring a cell combination list for the first DCI format is configured with more than one entry or if the DCI format includes the third information field, $N_{cell}^{DL}$ is equal to the number of scheduling cells indicated by the third information field in the DCI format, and if the information (e.g. ScheduledCellCombo-ListDCI-1-3) for configuring a cell combination list for the DCI format is configured with (or only includes) one entry, $N_{cell}^{DL}$ is equal to the number of cells configured by the third higher layer parameter (e.g. ScheduledCellCombo-ListDCI-1-3) or the entry included in the third higher layer parameter or an IE (e.g. Scheduled Cell Combo) used for configuring scheduled cell combinations; otherwise (or, if the DCI format does not include the third information field and/or is not provided with the third information field), $N_{cell}^{DL}$ is equal to the number of cells in the scheduled cell set configured by the information (e.g. the first higher layer parameter ScheduledCell-ListDCI-1-3) used for configuring scheduled cell sets.

For example, if the information (e.g. the fourth higher layer parameter ScheduledCellCombo-ListDCI-0-3) for configuring a cell combination list for the second DCI format is configured with more than one entry or if the DCI format includes the third information field, $N_{cell}^{UL}$ is equal to the number of scheduling cells indicated by the third information field in the DCI format, and if the information (e.g. the fourth higher layer parameter ScheduledCellCombo-ListDCI-0-3) for configuring a cell combination list for the DCI format is configured with (or only includes) one entry, $N_{cell}^{UL}$ is equal to the number of cells configured by the fourth higher layer parameter (e.g. ScheduledCellCombo-ListDCI-0-3) or the entry included in the fourth higher layer parameter or the IE (e.g. Scheduled Cell Combo) used for configuring scheduled cell combinations; otherwise (or, if the DCI format does not include the third information field and/or is not configured with the third information field), $N_{cell}^{UL}$ is equal to the number of cells in the scheduled cell set configured by the information (e.g. the second higher layer parameter ScheduledCell-ListDCI-0-3) used for configuring scheduled cell sets.

In some embodiments, the second information field may be used to indicate cells that are scheduled and/or cells that are not scheduled (in the scheduled cell set or scheduled cell combination). That is, the second information field (frequency domain resource assignment) is used to indicate frequency domain resource assignment and/or cells that are scheduled and/or cells that are not scheduled (in the scheduled cell set or scheduled cell combination).

For example, the second information field in the first DCI format indicates cells that are scheduled and/or cells that are not scheduled from the scheduled first cell set (indicated by the fourth information field or configured by the first higher layer parameter (when the first DCI format does not include the fourth information field). Assuming that the scheduled first cell set includes four cells, the second information field includes four information blocks (block number 1, block number 2, block number 3, block number 4), which correspond to four cells one by one. If all bits in an information block corresponding to a cell are set to be a second specific value, the cell is not scheduled; otherwise, the cell is scheduled.

For another example, the second information field in the first DCI format indicates cells that are scheduled and/or cells that are not scheduled from the scheduled first cell combination (indicated by the third information field or configured by the third higher layer parameter (when the first DCI format does not include the third information field). Assuming that the scheduled first cell combination includes four cells, the second information field includes four information blocks, which correspond to four cells one by one. If all bits in an information block corresponding to one cell are set to be a second specific value, the cell is not scheduled; otherwise, the cell is scheduled. For example, as shown in Table 3 below, only bits in information block 1 are not set to be the second specific value, a cell to which information block 1 corresponds, i.e. Cell 0, is indicated by the second information field as being a scheduled cell, and/or, while other cells are indicated by the second information field as cells that not scheduled.

Table 3

| Values of information blocks in FDRA | block number 1 (non-all-zero) | block number 2 (all-zero) | block number 3 (all-one) | block number 4 (all-zero or all-one) |
|---|---|---|---|---|
| Corresponding cells and corresponding resource allocation type | Cell 0, RA Type 0 | Cell 1, RA Type 0 | Cell 2, RA Type 1 | Cell 3, Dynamic RA Type |
| Whether | Yes | No | No | No |
| scheduled or not | | | | |

In some embodiments, when the first DCI format or the second DCI format includes the third information field, the second information field therein is not used to indicate a cell that is scheduled and/or a cell that is not scheduled.

In some embodiments, when the first DCI format or the second DCI format includes the third information field, the second information field therein is used to indicate a cell that is scheduled and/or a cell that is not scheduled in the first cell combination indicated by the third information field.

In some embodiments, the third information field (scheduled cells indicator) is used to indicate scheduled cells (or the scheduled first cell combination or the scheduled second cell combination). For example, in the first DCI format, the third information field indicates scheduled cells from the scheduled (first) cell set (by indicating a first cell combination), wherein the scheduled (first) cell set is indicated by the fourth information field in the first DCI format or configured by the first higher layer parameter (when the first DCI format does not include the fourth information field). For another example, in the second DCI format, the third information field indicates the scheduled cells from the scheduled (second) cell set (by indicating a second cell combination), wherein the scheduled (second) cell set is indicated by the fourth information field in the second DCI format or configured by the second higher layer parameter (when the second DCI format does not include the fourth information field).

In some embodiments, the first DCI format and/or the second DCI format include(s) or do/does not include the third information field.

For example, for the first DCI format, when the third higher layer parameter (e.g. ScheduledCellCombo-ListDCI-1-3) (for/corresponding to the scheduled first cell set) is not configured (or when the scheduled first cell set does not include the first cell combination list), the third information field is not present, or the number of bits is 0; otherwise, the number of bits is $\lceil \log_2 I_{DL} \rceil$, so as to indicate the scheduled cells from the first cell set (or, to indicate the first cell combination from the first cell combination list (in the first cell set)), wherein, $I_{DL}$ is, for example, the number of entries configured by ScheduledCellCombo-ListDCI-1-3 (i.e. the number of the fourteenth higher layer parameters included therein), and if ScheduledCellCombo-ListDCI-1-3 configures only one entry, the scheduled cells are cells configured by ScheduledCellCombo-ListDCI-1-3.

For example, for the second DCI format, when the fourth higher layer parameter (e.g. ScheduledCellCombo-ListDCI-0-3) (for/corresponding to the scheduled second cell set) is not configured (or when the scheduled first cell set does not include the first cell combination list), the third information field is not present, or the number of bits is 0; otherwise, the number of bits is $\lceil \log_2 I_{UL} \rceil$, so as to indicate the scheduled cells from the second cell set (or, to indicate the second cell combination from the second cell combination list (in the second cell set)), wherein, $I_{UL}$ is, for example, the number of entries configured by ScheduledCellCombo-ListDCI-0-3 (i.e. the number of the fourteenth higher layer parameters included therein), and if ScheduledCellCombo-ListDCI-0-3 configures only one entry, the scheduled cells are cells configured by ScheduledCellCombo-ListDCI-0-3.

In some embodiments, the fourth information field (scheduled cell set indicator) is used to indicate the scheduled cell set. For example, in the first DCI format, the fourth information field indicates the scheduled (first) cell set from configured (by the eleventh higher layer parameter) multiple (first) cell sets. In the second DCI format, the fourth information field indicates a scheduled (second) cell set from configured (by the eleventh higher layer parameter) multiple (second) cell sets.

In some embodiments, the fourth information field includes $\lceil \log_2 N_{set} \rceil$ bits; where, $N_{set}$ is the number of cell sets configured by the eleventh higher layer parameter (e.g. MC-DCI-SetofCellsToAddModList). For example, a relationship between values of the fourth information field and the indicated scheduled cell sets is shown in Table 1 below. When a value of the fourth information field is 0 (decimal), the scheduled cell set is a cell set configured by a first entry configured by the eleventh higher layer parameter.

Table 1

| Bit field mapped to index | Scheduled cell set |
|---|---|
| 0 | Cell set configured by the first entry in the eleventh layer parameter |
| 1 | Cell set configured by a second entry in the eleventh layer parameter |
| 2 | Cell set configured by a third entry in the eleventh layer parameter (if any) |
| 3 | Cell set configured by a fourth entry in the eleventh layer parameter (if any) |

In some embodiments, the fourth information field in the first DCI format includes $\lceil \log_2 N_{set1} \rceil$ bits; where, $N_{set1}$ is the number of the first cell sets configured by the eleventh higher layer parameter (e.g. MC-DCI-SetofCellsToAdd-ModList). For example, a relationship between values of the fourth information field and the indicated scheduled (first) cell set is as shown in Table 2 below. When a value of the fourth information field is 0 (decimal), the scheduled cell set is a first one of cell sets including the first cell set configured by the eleventh higher layer parameter, or is the first cell set. The fourth information field in the second DCI format includes $\lceil \log_2 N_{set2} \rceil$ bits; where, $N_{set2}$ is the number of the second cell sets configured by the eleventh higher layer parameter (e.g. MC-DCI-SetofCellsToAddModList). For example, a relationship between values of the fourth information field and the indicated scheduled (second) cell set is as shown in Table 2 below. When a value of the fourth information field is 0 (decimal), the scheduled cell set is a first one of cell sets including the second cell set configured by the eleventh higher layer parameter, or is the second cell set.

Table 2

| Bit field mapped to index | Scheduled cell set |
|---|---|
| 0 | Cell set configured by a first entry in the eleventh parameter and the first or second higher layer parameter is configured |
| 1 | Cell set configured by a second entry in the eleventh parameter and the first or second higher layer parameter is configured |
| 2 | Cell set configured by a third entry in the eleventh parameter and the first or second higher layer parameter (if any) is configured |
| 3 | Cell set configured by a fourth entry in the eleventh parameter and the first or second higher layer parameter (if any) is configured |

In some embodiments, the fourth information field indicates the scheduled cell set by indicating or being based on the cell set ID (configured by the thirteenth higher layer parameter). For example, for the first DCI format, a value of the fourth information field is equal to a value of a cell set ID to which the scheduled first cell set corresponds. When a value of the fourth information field is 0 (decimal), the scheduled first cell set is a first cell set with a corresponding cell set ID=0. For the second DCI format, a value of the fourth information field is equal to a value of a cell set ID to which the scheduled second cell set corresponds. When a value of the fourth information field is 0 (decimal), the scheduled second cell set is a second cell set with a corresponding cell set ID=0. Wherein, a cell set ID to which a first cell set or a second cell set corresponds is a cell set ID configured by the thirteenth higher layer parameter in the twelfth configuration information including the first higher layer parameter used for configuring the first cell set or the second higher layer parameter used for configuring the second cell set.

In some embodiments, for the first DCI format, the terminal equipment does not expect that the fourth information field indicates a cell set that does not include the first cell set, and/or does not expect that a value of the fourth information field is equal to a value of the cell set ID configured by the thirteenth higher layer parameter in an entry (the twelfth configuration information (e.g. MC-DCI-SetofCells)) (in the eleventh higher layer parameter) not including the first higher layer parameter. For the first DCI format, the terminal equipment does not expect that the fourth information field indicates a cell set that does not include the second cell set, and/or does not expect that a value of the fourth information field is equal to a value of the cell set ID configured by the thirteenth higher layer parameter in an entry (the twelfth configuration information (e.g. MC-DCI-SetofCells)) (in the eleventh higher layer parameter) not including the second higher layer parameter.

In some embodiments, the first DCI format and/or the second DCI format do/does not include the fourth information field.

For example, when the eleventh higher layer parameter only includes one twelfth higher layer parameter, the first DCI format and the second DCI format do/does not include the fourth information field. If the twelfth higher layer parameter includes the first higher layer parameter, for a transmitted/received first DCI format, its corresponding scheduled cell set is the first cell set configured by the twelfth higher layer parameter or configured in the first higher layer parameter. If the twelfth higher layer parameter includes the second higher layer parameter, for a transmitted/received second DCI format, its corresponding scheduled cell set is the second cell set configured by the twelfth higher layer parameter or configured in the second higher layer parameter.

For example, when the eleventh higher layer parameter only includes one twelfth higher layer parameter including the first higher layer parameter, the first DCI format does not include the fourth information field. For a transmitted/received first DCI format, its corresponding scheduled cell set is the first cell set configured by the twelfth higher layer parameter or configured in the first higher layer parameter.

For example, when the eleventh higher layer parameter only includes one twelfth higher layer parameter including the second higher layer parameter, the second DCI format does not include the fourth information field. For a transmitted/received second DCI format, its corresponding scheduled cell set is the second cell set configured by the twelfth higher layer parameter or configured in the second higher layer parameter.

In some embodiments, one or more fifth information fields include one or more of a modulation coding scheme, a new data indicator, a redundancy version, HARQ process number, antenna ports, and DMRS sequence initialization. In addition, it/they may include but are not limited to at least one of the following information fields: for the first DCI format: an identifier for DCI formats, a BWP (bandwidth part) indicator, time domain resource assignment, virtual resource block to physical resource block (VRB to PRB) mapping, a physical resource block (PRB) bundling size indicator, a rate matching indicator, ZP CSI-RS trigger, a downlink assignment index, a TPC command for scheduled PUCCH, a PUCCH resource indicator, a PDSCH-to-HARQ_feedback timing indicator, an HARQ-ACK retransmission indicator, a transmission configuration indication, an SRS request, an SRS offset indicator, a priority indicator, ChannelAccess-CPext, a minimum applicable scheduling offset indicator, a PDCCH monitoring adaptation indication, and a PUCCH cell indicator; for the second DCI format: an identifier for DCI formats, a BWP indicator, time domain resource assignment, a frequency hopping flag, a TPC command for scheduled PUCCH, an SRS resource indicator, precoding information and number of layers, an SRS request, an SRS offset indicator, a CSI request, PTRS-DMRS association, a UL-SCH indicator, an open-loop power control parameter set indication, a priority indicator, ChannelAccess-CPext, a minimum applicable scheduling offset indicator, and a PDCCH monitoring adaptation indication, which shall not be enumerated herein any further.

For example, for the first DCI format, the modulation coding scheme (field) includes $N_{cell}^{DL}$ information blocks, information block 1, information block 2.., information block $N_{cell}^{DL}$; where, $N_{cell}^{DL}$, for example, is/is equal to the number of cells in the scheduled first cell combination or the scheduled first cell set, wherein the scheduled first cell combination is indicated by the third information field in the first DCI format or configured by the third higher layer parameter (when the first DCI format does not include the third information field), and the scheduled first cell set is indicated by the fourth information field in the first DCI format or configured by the first higher layer parameter (when the first DCI format does not include the fourth information field). For example, when a (corresponding) first cell combination list (or the third higher layer parameter) is not configured (for the scheduled first cell set), $N_{cell}^{DL}$ is equal to the number of cells in the scheduled first cell set, and when a (corresponding) first cell combination list (or the third higher layer parameter) is configured (for the scheduled first cell set), $N_{cell}^{DL}$ is equal to the number of cells in the scheduled first cell combination; however, it is not limited thereto. Wherein, each information block corresponds to a modulation coding scheme of a cell (in $N_{cell}^{DL}$ cells), and the information blocks are arranged in an ascending order of cell indices (such as the above serving cell index and/or the second index) (of the cells in the scheduled first cell combination or the scheduled first cell set). For example, information block 1 (a first one of information blocks) corresponds to an MSC of a cell with a smallest cell index, information block 2 (a second one of information blocks) corresponds to an MSC of a cell with a secondarily smallest cell index, and so on, each information block being 5 bits. The new data indicator includes $N_{cell}^{DL}$ information blocks; where, $N_{cell}^{DL}$, for example, is/is equal to the number of cells in the scheduled first cell combination or the scheduled first cell set, wherein the scheduled first cell combination is indicated by the third information field in the first DCI format or configured by the third higher layer parameter (when the first DCI format does not include the third information field), and the scheduled first cell set is indicated by the fourth information field in the first DCI format or configured by the first higher layer parameter (when the first DCI format does not include the fourth information field). For example, when a (corresponding) first cell combination list (or the third higher layer parameter) is not configured (for the scheduled first cell set), $N_{cell}^{DL}$ is equal to the number of cells in the scheduled first cell set, and when a (corresponding) first cell combination list (or the third higher layer parameter) is configured (for the scheduled first cell set), $N_{cell}^{DL}$ is equal to the number of cells in the scheduled first cell combination; however, it is not limited thereto. Each information block corresponds to a new data indicator of one cell (in $N_{cell}^{DL}$ cells), and the information blocks are arranged in an ascending order of cell indices (such as the above serving cell index and/or the second index) (of the cells in the scheduled first cell combination or the scheduled first cell set). For example, information block 1 (a first one of information blocks) corresponds to a new data indicator of a cell with a smallest cell index, information block 2 (a second one of information blocks) corresponds to a new data indicator of a cell with a secondarily smallest cell index, and so on, each information block being 1 bit. The redundancy version includes $N_{cell}^{DL}$ information blocks, information block 1, information block 2, information block $N_{cell}^{DL}$; where, $N_{cell}^{DL}$, for example, is/is equal to the number of cells in the scheduled first cell combination or the scheduled first cell set, wherein the scheduled first cell combination is indicated by the third information field in the first DCI format or configured by the third higher layer parameter (when the first DCI format does not include the third information field), and the scheduled first cell set is indicated by the fourth information field in the first DCI format or configured by the first higher layer parameter (when the first DCI format does not include the fourth information field). For example, when a (corresponding) first cell combination list (or the third higher layer parameter) is not configured (for the scheduled first cell set), $N_{cell}^{DL}$ is equal to the number of cells in the scheduled first cell set, and when a (corresponding) first cell combination list (or the third higher layer parameter) is configured (for the scheduled first cell set), $N_{cell}^{DL}$ is equal to the number of cells in the scheduled first cell combination; however, it is not limited thereto. Wherein, each information block corresponds to an RV of one cell (in cells), and the information blocks are arranged in an ascending order of cell indices (such as the above serving cell index and/or the second index) (of the cells in the scheduled first cell combination or the scheduled first cell set). For example, information block 1 (a first one of information blocks) corresponds to an RV of a cell with a smallest cell index, information block 2 (a second one of information blocks) corresponds to an RV of a cell with a secondarily smallest cell index, and so on, each information block being 0 bit or 1 bit or 2 bits. The HARQ process number includes $N_{cell}^{DL}$ information blocks, information block 1, information block 2, information block $N_{cell}^{DL}$; where, $N_{cell}^{DL}$, for example, is/is equal to the number of cells in the scheduled first cell combination or the scheduled first cell set, wherein the scheduled first cell combination is indicated by the third information field in the first DCI format or configured by the third higher layer parameter (when the first DCI format does not include the third information field), and the scheduled first cell set is indicated by the fourth information field in the first DCI format or configured by the first higher layer parameter (when the first DCI format does not include the fourth information field). For example, when a (corresponding) first cell combination list (or the third higher layer parameter) is not configured (for the scheduled first cell set), $N_{cell}^{DL}$ is equal to the number of cells in the scheduled first cell set, and when a (corresponding) first cell combination list (or the third higher layer parameter) is configured (for the scheduled first cell set), $N_{cell}^{DL}$ is equal to the number of cells in the scheduled first cell combination; however, it is not limited thereto. Wherein, each information block corresponds to an HARQ process number of one cell (in $N_{cell}^{DL}$ cells), and the information blocks are arranged in an ascending order of cell indices (such as the above serving cell index and/or the second index) (of the cells in the scheduled first cell combination or the scheduled first cell set). For example, information block 1 (a first one of information blocks) corresponds to an HARQ process number of a cell with a smallest cell index, information block 2 (a second one of information blocks) corresponds to an HARQ process number of a cell with a secondarily smallest cell index, and so on, each information block being 0 bit or 1 bit or 2 bits. The antenna ports are for type 1a (that is, when an indication type for an antenna port field is configured as type 1a), the field includes $\max_{r\in\{1,2,\ldots,N_{cell}^{DL,2}\}} M_A(r)$ bits, which are respectively applied to scheduled cells; where, $N_{cell}^{DL,2}$ is the number of cells configured by the first higher layer parameter ScheduledCell-ListDCI-1-3, r is mapped in an ascending mapping of the cells, r=1 corresponds to a cell with a smallest cell index, and values of $M_A(r)$ may be 2, 3, 4, 5 bits. For type 2, $N_{cell}^{DL}$ information blocks are included, information block 1, information block 2 .., information block $N_{cell}^{DL}$; where, $N_{cell}^{DL}$, for example, is/is equal to the number of cells in the scheduled first cell combination or the scheduled first cell set, wherein the scheduled first cell combination is indicated by the third information field in the first DCI format or configured by the third higher layer parameter (when the first DCI format does not include the third information field), and the scheduled first cell set is indicated by the fourth information field in the first DCI format or configured by the first higher layer parameter (when the first DCI format does not include the fourth information field). For example, when a (corresponding) first cell combination list (or the third higher layer parameter) is not configured (for the scheduled first cell set), $N_{cell}^{DL}$ is equal to the number of cells in the scheduled first cell set, and when a (corresponding) first cell combination list (or the third higher layer parameter) is configured (for the scheduled first cell set), $N_{cell}^{DL}$ is equal to the number of cells in the scheduled first cell combination; however, it is not limited thereto. Wherein, each information block corresponds to an antenna port of one cell (in $N_{cell}^{DL}$ cells), and the information blocks are arranged in an ascending order of cell indices (such as the above serving cell index and/or the second index) (of the cells in the scheduled first cell combination or the scheduled first cell set). For example, information block 1 (a first one of information blocks) corresponds to an antenna port of a cell with a smallest cell index, information block 2 (a second one of information blocks) corresponds to an antenna port of a cell with a secondarily smallest cell index, and so on. The DMRS sequence initialization includes 1 bit, and the information field may be applied to all scheduled cells indicated by the third information field or the second information field.

For example, for the second DCI format, the modulation coding scheme (field) includes $N_{cell}^{UL}$ information blocks, information block 1, information block 2.., information block $N_{cell}^{UL}$; where, $N_{cell}^{UL}$, for example, is/is equal to the number of cells in the scheduled second cell combination or the scheduled second cell set, wherein the scheduled second cell combination is indicated by the third information field in the second DCI format or configured by the fourth higher layer parameter (when the first DCI format does not include the third information field), and the scheduled second cell set is indicated by the fourth information field in the second DCI format or configured by the second higher layer parameter (when the first DCI format does not include the fourth information field). For example, when a (corresponding) second cell combination list (or the fourth higher layer parameter) is not configured (for the scheduled second cell set), $N_{cell}^{UL}$ is equal to the number of cells in the scheduled second cell set, and when a (corresponding) second cell combination list (or the fourth higher layer parameter) is configured (for the scheduled second cell set), $N_{cell}^{UL}$ is equal to the number of cells in the scheduled second cell combination; however, it is not limited thereto. Wherein, each information block corresponds to a modulation coding scheme of one cell (in $N_{cell}^{UL}$ cells), and the information blocks are arranged in an ascending order of cell indices (such as the above serving cell index and/or the second index) (of the cells in the scheduled second cell combination or the scheduled second cell set). For example, information block 1 (a first one of information blocks) corresponds to a modulation coding scheme of a cell with a smallest cell index, information block 2 (a second one of information blocks) corresponds to a modulation coding scheme of a cell with a secondarily smallest cell index, and so on, each information block being 5 bits. The new data indicator includes $N_{cell}^{UL}$ information blocks, information block 1, information block 2, ...information block $N_{cell}^{UL}$; where, $N_{cell}^{UL}$, for example, is/is equal to the number of cells in the scheduled second cell combination or the scheduled second cell set, wherein the scheduled second cell combination is indicated by the third information field in the second DCI format or configured by the fourth higher layer parameter (when the first DCI format does not include the third information field), and the scheduled second cell set is indicated by the fourth information field in the second DCI format or configured by the second higher layer parameter (when the first DCI format does not include the fourth information field). For example, when a (corresponding) second cell combination list (or the fourth higher layer parameter) is not configured (for the scheduled second cell set), $N_{cell}^{UL}$ is equal to the number of cells in the scheduled second cell set, and when a (corresponding) second cell combination list (or the fourth higher layer parameter) is configured (for the scheduled second cell set), $N_{cell}^{UL}$ is equal to the number of cells in the scheduled second cell combination; however, it is not limited thereto. Wherein, each information block corresponds to a new data indicator of one cell (in $N_{cell}^{UL}$ cells), and the information blocks are arranged in an ascending order of cell indices (such as the above serving cell index and/or the second index) (of the cells in the scheduled second cell combination or the scheduled second cell set). For example, information block 1 (a first one of information blocks) corresponds to a new data indicator of a cell with a smallest cell index, information block 2 (a second one of information blocks) corresponds to a new data indicator of a cell with a secondarily smallest cell index, and so on, each information block being 1 bit. The redundancy version includes $N_{cell}^{UL}$ information blocks, information block 1, information block 2, information block $N_{cell}^{UL}$ ; where, $N_{cell}^{UL}$ , for example, is/is equal to the number of cells in the scheduled second cell combination or the scheduled second cell set, wherein the scheduled second cell combination is indicated by the third information field in the second DCI format or configured by the fourth higher layer parameter (when the first DCI format does not include the third information field), and the scheduled second cell set is indicated by the fourth information field in the second DCI format or configured by the second higher layer parameter (when the first DCI format does not include the fourth information field). For example, when a (corresponding) second cell combination list (or the fourth higher layer parameter) is not configured (for the scheduled second cell set), $N_{cell}^{UL}$ is equal to the number of cells in the scheduled second cell set, and when a (corresponding) second cell combination list (or the fourth higher layer parameter) is configured (for the scheduled second cell set), $N_{cell}^{UL}$ is equal to the number of cells in the scheduled second cell combination; however, it is not limited thereto. Wherein, each information block corresponds to an RV of one cell (in $N_{cell}^{UL}$ cells), and the information blocks are arranged in an ascending order of cell indices (such as the above serving cell index and/or the second index) (of the cells in the scheduled second cell combination or the scheduled second cell set). For example, information block 1 (a first one of information blocks) corresponds to an RV of a cell with a smallest cell index, information block 2 (a second one of information blocks) corresponds to an RV of a cell with a secondarily smallest cell index, and so on, each information block being 0 bit or 1 bit or 2 bits. The HARQ process number includes $N_{cell}^{UL}$ information blocks, information block 1, information block 2, information block $N_{cell}^{UL}$ ; where, $N_{cell}^{UL}$ , for example, is/is equal to the number of cells in the scheduled second cell combination or the scheduled second cell set, wherein the scheduled second cell combination is indicated by the third information field in the second DCI format or configured by the fourth higher layer parameter (when the first DCI format does not include the third information field), and the scheduled second cell set is indicated by the fourth information field in the second DCI format or configured by the second higher layer parameter (when the first DCI format does not include the fourth information field). For example, when a (corresponding) second cell combination list (or the fourth higher layer parameter) is not configured (for the scheduled second cell set), $N_{cell}^{UL}$ is equal to the number of cells in the scheduled second cell set, and when a (corresponding) second cell combination list (or the fourth higher layer parameter) is configured (for the scheduled second cell set), $N_{cell}^{UL}$ is equal to the number of cells in the scheduled second cell combination; however, it is not limited thereto. Wherein, each information block corresponds to an HARQ process number of one cell (in $N_{cell}^{UL}$ cells), and the information blocks are arranged in an ascending order of cell indices (such as the above serving cell index and/or the second index) (of the cells in the scheduled first cell combination or the scheduled first cell set). For example, information block 1 (a first one of information blocks) corresponds to an HARQ process number of a cell with a smallest cell index, information block 2 (a second one of information blocks) corresponds to an HARQ process number of a cell with a secondarily smallest cell index, and so on, each information block being 0 bit or 1 bit or 2 bits. The antenna ports are for type 1a (that is, when an indication type for an antenna port field is configured as type 1a), the field includes $\max_{r\in\{1,2,\ldots,N_{cell}^{UL,2}\}} M_A(r)$ bits, which are respectively applied to scheduled cells; where, $N_{cell}^{UL,2}$ is the number of cells configured by the second higher layer parameter ScheduledCell-ListDCI-0-3, r is mapped in an ascending mapping of the cells, r=1 corresponds to a cell with a smallest cell index, and values of $M_A(r)$ may be 2, 3, 4, 5 bits. For type 2, $N_{cell}^{UL}$ information blocks are included, information block 1, information block 2 .., information block $N_{cell}^{UL}$ ; where, $N_{cell}^{UL}$ , for example, is/is equal to the number of cells in the scheduled second cell combination or the scheduled second cell set, wherein the scheduled second cell combination is indicated by the third information field in the second DCI format or configured by the fourth higher layer parameter (when the first DCI format does not include the third information field), and the scheduled second cell set is indicated by the fourth information field in the second DCI format or configured by the second higher layer parameter (when the first DCI format does not include the fourth information field). For example, when a (corresponding) second cell combination list (or the fourth higher layer parameter) is not configured (for the scheduled second cell set), $N_{cell}^{UL}$ is equal to the number of cells in the scheduled second cell set, and when a (corresponding) second cell combination list (or the fourth higher layer parameter) is configured (for the scheduled second cell set), $N_{cell}^{UL}$ is equal to the number of cells in the scheduled second cell combination; however, it is not limited thereto. Wherein, each information block corresponds to an antenna port of one cell (in $N_{cell}^{UL}$ cells), and the information blocks are arranged in an ascending order of cell indices (such as the above serving cell index and/or the second index) (of the cells in the scheduled second cell combination or the scheduled second cell set). For example, information block 1 (a first one of information blocks) corresponds to an antenna port of a cell with a smallest cell index, information block 2 (a second one of information blocks) corresponds to an antenna port of a cell with a secondarily smallest cell index, and so on. The DMRS sequence initialization includes 1 bit, and the information field may be applied to all scheduled cells indicated by the third information field or the second information field.

In some embodiments, the first information field (Scell dormancy indication) is used for Scell dormancy indication. The first information field includes a first bitmap, and how the first information field indicates the Scell dormancy shall be described later. When the ninth higher layer parameter and/or the tenth higher layer parameter is/are not enabled, such as when the ninth higher layer parameter and/or the tenth higher layer parameter is/are not included/do/does not exist in the serving cell configuration information, the first information field is not present, or the number of bits of the first information field is 0, and when the ninth higher layer parameter and/or the tenth higher layer parameter is/are included/exist(s) in the serving cell configuration information, the number of bits of the first information field is determined by the number of Scell groups and/or the number of dormancy group ID(s) (the seventh higher layer parameter (DormancyGroupID-r16)).

In some embodiments, when a value of a bit of the first bitmap is 0, for a UE of each active SCell in a configured corresponding SCell group, an active DL BWP (provided by the fifth higher layer parameter) is indicated; when a value of a bit of the first bitmap is 1, when a currently active DL BWP is a dormant DL BWP, for a UE of each active SCell in a configured corresponding SCell group, an active DL BWP (provided by the sixth higher layer parameter) is indicated; and when the currently active DL BWP is not a dormant DL BWP, for a UE of each active SCell in a configured corresponding SCell group, the currently active DL BWP is indicated. The terminal equipment sets the active DL BWP to be the indicated active DL BWP.

In some embodiments, the ninth higher layer parameter and/or the tenth higher layer parameter is/are also limited by the fifth higher layer parameter and/or the sixth higher layer parameter and/or the seventh higher layer parameter and/or the fifteenth higher layer parameter. For example, only when the seventh higher layer parameter and/or the fifteenth higher layer parameter DormancyGroupID-r16 are configured/provided, that the first information field is present in the first DCI format and/or the second DCI format is configured via the ninth higher layer parameter and/or the tenth higher layer parameter.

For example, for the second DCI format, when the tenth higher layer parameter is not enabled, the number of bits in the first information field is 0; otherwise, it may be X (such as 1,2,3,4,5) bits. The number of bits or the bitmap is determined according to the number of different DormancyGroupID(s) configured by the seventh higher layer parameter dormancyGroupWithinActiveTime, the first information field includes the first bitmap, each bit in the first bitmap corresponding respectively to one Scell group and/or one dormancy group ID (configured by the seventh higher layer parameter DormancyGroupWithinActiveTime), and the MSB to LSB of the first information field or the first bitmap corresponds to a first Scell group to a last Scell group in an ascending order of dormancy group IDs, wherein the Scell group is identified by a dormancy group ID. For example,

| - SCell dormancy indication - 0 bit if higher layer parameter *dormancyDCI-0-3* is not enabled; otherwise 1, 2, 3, 4, or 5 bits bitmap determined according to the number of different *DormancyGroupID(s)* provided by higher layer parameter *dormancyGroupWithinActiveTime,* where each bit corresponds to one of the SCell group(s) configured by higher layers parameter *dormancyGroupWithinActiveTime,* with MSB to LSB of the bitmap corresponding to the first to last configured SCell group in ascending order of *DormancyGroupID.* The field is only present when this format is carried by PDCCH on the primary cell within DRX Active Time and the UE is configured with at least two DL BWPs for an SCell. |
|---|

For example, for the first DCI format, when the ninth higher layer parameter is not enabled, the number of bits in the first information field is 0; otherwise, it may be X (such as 1,2,3,4,5) bits. The number of bits or the bitmap is determined according to the number of different DormancyGroupID(s) configured by the seventh higher layer parameter dormancyGroupWithinActiveTime, the first information field includes the first bitmap, each bit in the first bitmap corresponding respectively to one Scell group and/or one dormancy group ID (configured by the seventh higher layer parameter DormancyGroupWithinActiveTime), and the MSB to LSB of the first information field or the first bitmap corresponds to a first Scell group to a last Scell group in an ascending order of dormancy group IDs, wherein the Scell group is identified by a dormancy group ID. For example,

- SCell dormancy indication - 0 bit if higher layer parameter *dormancyDCI-1-3* is not enabled; otherwise 1, 2, 3, 4, or 5 bits bitmap determined according to the number of different *DormancyGroupID(s)* provided by higher layer parameter *dormancyGroupWithinActiveTime,* where each bit corresponds to one of the SCell group(s) configured by higher layers parameter *dormancyGroupWithinActiveTime,* with MSB to LSB of the bitmap corresponding to the first to last configured SCell group in ascending order of *DormancyGroupID.* The field is only present when this format is carried by PDCCH on the primary cell within DRX Active Time and the UE is configured with at least two DL BWPs for an SCell.

In some embodiments, the ninth higher layer parameter and/or the tenth higher layer parameter is/are not limited by the fifth higher layer parameter and/or the sixth higher layer parameter and/or the seventh higher layer parameter. For example, when the seventh higher layer parameter and/or the fifteenth higher layer parameter DormancyGroupID-r16 are not configured/provided, that the first information field is present in the first DCI format and/or the second DCI format is configured via the ninth higher layer parameter and/or the tenth higher layer parameter. For example,

- SCell dormancy indication - 0 bit if higher layer parameter *dormancyDCI-0-3* is not enabled; otherwise,
  - 0 bit if higher layer parameter *dormancyGroupWithinActiveTime* is not configured; otherwise 1, 2, 3, 4, or 5 bits bitmap determined according to the number of different *DormancyGroupID(s)* provided by higher layer parameter *dormancyGroupWithinActiveTime,* where each bit corresponds to one of the SCell group(s) configured by higher layers parameter *dormancyGroupWithinActiveTime,* with MSB to LSB of the bitmap corresponding to the first to last configured SCell group in ascending order of *DormancyGroupID.* The field is only present when this format is carried by PDCCH on the primary cell within DRX Active Time and the UE is configured with at least two DL BWPs for an SCell.

For example, for the second DCI format, when the tenth higher layer parameter is not enabled, the number of bits in the first information field is 0; otherwise, when the seventh higher layer parameter and/or the fifteenth higher layer parameter is/are not configured/provided, the number of bits in the first information field is 0, and when the seventh higher layer parameter and/or the fifteenth higher layer parameter is/are configured/provided, it may be X (such as 1,2,3,4,5) bits. The number of bits or the bitmap is determined according to the number of different DormancyGroupID(s) configured by the seventh higher layer parameter dormancyGroupWithinActiveTime, the first information field includes the first bitmap, each bit in the first bitmap corresponding respectively to one Scell group and/or one dormancy group ID (configured by the seventh higher layer parameter dormancyGroupWithinActiveTime), and the MSB to LSB of the first information field or the first bitmap corresponds to a first Scell group to a last Scell group in an ascending order of dormancy group IDs, wherein the Scell group is identified by a dormancy group ID. For example,

- SCell dormancy indication - 0 bit if higher layer parameter *dormancyDCI-1-3* is not enabled; otherwise,
  - 0 bit if higher layer parameter *dormancyGroupWithinActiveTime* is not configured; otherwise 1, 2, 3, 4, or 5 bits bitmap determined according to the number of different *DormancyGroupID(s)* provided by higher layer parameter *dormancyGroupWithinActiveTime,* where each bit corresponds to one of the SCell group(s) configured by higher layers parameter *dormancyGroupWithinActiveTime,* with MSB to LSB of the bitmap corresponding to the first to last configured SCell group in ascending order of *DormancyGroupID.* The field is only present when this format is carried by PDCCH on the primary cell within DRX Active Time and the UE is configured with at least two DL BWPs for an SCell.

For example, for the first DCI format, when the ninth higher layer parameter is not enabled, the number of bits in the first information field is 0; otherwise, when the seventh higher layer parameter and/or the fifteenth higher layer parameter is/are not configured/provided, the number of bits in the first information field is 0, and when the seventh higher layer parameter and/or the fifteenth higher layer parameter is/are configured/provided, it may be X (such as 1,2,3,4,5) bits. The number of bits or the bitmap is determined according to the number of different DormancyGroupID(s) configured by the seventh higher layer parameter dormancyGroupWithinActiveTime, the first information field includes the first bitmap, each bit in the first bitmap corresponding respectively to one Scell group and/or one dormancy group ID (configured by the seventh higher layer parameter dormancyGroupWithinActiveTime), and the MSB to LSB of the first information field or the first bitmap corresponds to a first Scell group to a last Scell group in an ascending order of dormancy group IDs, wherein the Scell group is identified by a dormancy group ID.

(I) How the first DCI format and/or the second DCI format support(s) cell dormancy indication per secondary cell group, including whether simultaneous cell (PDSCHs and/or PUSCHs of a cell) scheduling is supported, shall be described below.

In this implementation, the first DCI format and/or the second DCI format indicate(s) Scell dormancy by using the first information field only, where the using the first information field only refers to, for example, that bits in other information fields in the DCI format do not correspond to an Scell or an Scell group.

In this implementation, the first DCI format and/or the second DCI format include(s) the first information field, and one bit of the first information field corresponds to one Scell group and/or one dormancy group ID (DormancyGroupID).

In this implementation, the first information field includes a first bitmap, and each bit in the first bitmap corresponds to one Scell group and/or one dormancy group ID respectively. The MSB to LSB of the first information field or the first bitmap corresponds to the first Scell group to the last Scell group in an ascending order of dormancy group IDs. The number of bits included in the first information field or the first bitmap is determined by the number of Scell groups and/or the number of dormancy group ID(s). A cell used to transmit the DCI format (i.e. the first cell) and Scell(s) in the Scell group belong to identical or different cell groups and/or identical or different PUCCH groups. The cell group includes an MCG and/or an SCG, that is, it is assumed that they belong to identical cell groups, i.e. they belong to the MCG or belong to the SCG.

In some embodiments, the first DCI format and/or the second DCI format may schedule simultaneous indicating dormancy. The first DCI format and/or the second DCI format only schedule the first cell (the cell used to transmit the DCI format) and/or the second cell. The second cell includes a Pcell and/or a PScell and/or an SpCell and/or a primary cell and/or a PUCCH Scell and/or an Scell not configured with a dormant BWP and/or a dormancy group ID and/or a cell not configured with a dormant BWP and/or a dormancy group ID and/or a cell not indicated as being dormant by the first information field in the first DCI format and/or the second DCI format. The first cell and the second cell are or are not the same cell, or the second cell includes or does not include the first cell.

In some embodiments, the scheduled cell indicated by the second information field and/or the third information field in the first DCI format or the second DCI format includes only the first cell and/or the second cell.

In this implementation, the second information field may further be used to indicate a scheduled cell and/or an unscheduled cell, the scheduled cell indicated by the second information field including only the first cell and/or the second cell, and/or, the second information field indicates that the scheduled first cell set or the scheduled cell indicated by the third information field or a cell other than the first cell and/or the second cell in the scheduled cell configured by the third higher layer parameter and/or the fourth higher layer parameter is not scheduled.

In this implementation, the first DCI format may further include a third information field for indicating a scheduled cell, the cell indicated by the third information field including only the first cell and/or the second cell. The third information field indicates the scheduled cell from the scheduled first cell set.

In this implementation, the second DCI format may further include a third information field for indicating a scheduled cell, the cell indicated by the third information field including only the first cell and/or the second cell. The third information field indicates the scheduled cell from the scheduled second cell set.

In this implementation, the scheduled first cell set is configured by the first higher layer parameter or indicated by the fourth information field in the first DCI format, and the scheduled second cell set is configured by the second higher layer parameter or indicated by the fourth information field in the first DCI format.

In this implementation, the first DCI format may further include a fourth information field for indicating a scheduled first cell set, the first cell set indicated by the fourth information field including the first cell and/or the second cell. The second DCI format may further include a fourth information field for indicating a scheduled cell set, the second cell set indicated by the fourth information field including the first cell and/or the second cell.

Example 1: when only the first information field is used to indicate Scell dormancy, a cell is scheduled, but an Scell that may possibly be indicated as being dormant (an Scell configured with a dormant BWP and/or a dormancy group ID) is not scheduled.

Instance 1: Only an SpCell/primary cell is scheduled (the cell is or is not the first cell)

In instance 1, the scheduled first cell set includes an SpCell/primary cell (such as being configured by the first higher layer parameter or indicated by the fourth information field), and the scheduled second cell set includes an SpCell/primary cell (such as being configured by the second higher layer parameter or indicated by the fourth information field); and/or,

Case 1: the first DCI format includes the third information field (and/or, when the third higher layer parameter is configured for the scheduled cell set and/or the third higher layer parameter configures multiple entries), and the (scheduled) cell indicated by the third information field includes only an SpCell/primary cell (that is, the third information field indicates only an SpCell/primary cell); and the second DCI format includes the third information field (and/or, when the fourth higher layer parameter is configured for the scheduled cell set and/or the fourth higher layer parameter configures multiple entries), and the (scheduled) cell indicated by the third information field includes only an SpCell/primary cell (that is, the third information field indicates only an SpCell/primary cell).

Case 2: the third higher layer parameter for the scheduled cell set is not configured, and the (scheduled) cell indicated by the second information field includes only an SpCell/primary cell (that is, the second information field indicates only an SpCell/primary cell). The second information field schedules only a cell belonging to the first cell and/or the second cell, and does not schedule a cell other than the first cell and/or the second cell; and the fourth higher layer parameter for the scheduled cell set is not configured, and the (scheduled) cell indicated by the second information field includes only an SpCell/primary cell (that is, the second information field indicates only an SpCell/primary cell). The second information field schedules only a cell belonging to the first cell and/or the second cell, and does not schedule a cell other than the first cell and/or the second cell.

Instance 2: only an SpCell/primary cell and/or a PUCCH Scell is/are scheduled (the cell is or is not the first cell)
Instance 3: only an SpCell/primary cell and/or an Scell that is not configured/provided with a dormant BWP and/or a dormancy group ID is/are scheduled (the cell is or is not the first cell)
Instance 4: only a cell that is not configured/provided with a dormant BWP and/or a dormancy group ID is scheduled (the cell is or is not the first cell)

Example 2: when only the first information field is used to indicate Scell dormancy, an Scell that may possibly be indicated as being dormant (an Scell that is configured/provided with the seventh higher layer parameter and/or fifteenth higher layer parameter, or an Scell that belongs to the configured Scell group) may be scheduled, for example, only a cell that is not indicated as being dormant by the first information field may be scheduled (or, in other words, a cell not belonging to a cell group that is indicated by the first information field as being dormant may only be scheduled).

In some embodiments, the first DCI format and/or the second DCI format may schedule a third cell while indicating Scell dormancy, the third cell including a cell indicated as being dormant by the first information field and/or a cell configured with a dormant BWP and/or a dormancy group ID. Wherein, the cell scheduled by the first DCI format and/or the second DCI format is configured by the first higher layer parameter and/or the second higher layer parameter and/or indicated by the second information field and/or the third information field in the first DCI format and/or the second DCI format. For the information field including one or more information blocks in the first DCI format and/or the second DCI format (the information field including information blocks is as described above, which shall not be described herein any further), information blocks to which the third cell corresponds are set to be invalid values or default values and/or are reserved and/or are ignored by the terminal equipment.

Example 3: when only the first information field is used to indicate Scell dormancy, an Scell indicated by the field as being dormant (or entering dormancy, or entering/activating/switching to a dormant BWP) may be scheduled (or an Scell belonging to an Scell group indicated by the field as being dormant (or entering dormancy, or entering/activating/switching to a dormant BWP)). For example, when the scheduled cell includes a cell indicated as being dormant by the first information field, for an information field of Type 2 (including one or more information blocks), an information block to which the cell indicated as being dormant correspond is set to be an invalid value and/or is reserved and/or the terminal equipment ignores the information block to which the cell corresponds, and for an information field of Type 1B (indicating a list based on a configuration including one or more lists, wherein a list includes configuration indices corresponding respectively to multiple cells), an index to which the cell corresponds is set to be an invalid value and/or is reserved and/or the terminal equipment ignores the index to which the cell corresponds. In other words, when the scheduled cell includes a cell belonging to the Scell group indicated as dormant by the first information field, for the information field of Type 2, an information block to which the cell belonging to the Scell group corresponds is set to be an invalid value and/or is reserved and/or the UE ignores the information block to which the cell corresponds, and for the information field of Type 1B, an index to which the cell corresponds is set to be an invalid value and/or is reserved and/or the terminal equipment ignores the index to which the cell corresponds.

In some embodiments, the first DCI format and/or the second DCI format do/does not schedule a cell, that is, the first DCI format and/or the second DCI format support(s) scheduling one or more cells, but no cell is actually scheduled. That is, no scheduling is performed while indicating dormancy, for example, bits in the second information field are set to be a second specific value. Thus, there exists no case where an Scell possibly be indicated as being dormant is scheduled.

In some embodiments, the terminal equipment determines that the first information field in the DCI format indicates Scell dormancy in the above manner according to the second information field and/or the third information field. For example, when the scheduled cell indicated by the second information field and/or the third information field includes only the first cell and/or the second cell, or when the second information field and/or the third information field do/does not indicate a scheduled cell or indicate(s) a cell that is not scheduled cell or do/does not schedule a cell, the first information field in the DCI format indicates Scell dormancy in the above manner; and when the scheduled cell indicated by the second information field and/or the third information field includes a cell other than the first cell and/or the second cell, or when the second information field and/or the third information field indicate(s) a scheduled cell, the first information field in the DCI format is invalid, and/or is reserved, and/or does not indicate Scell dormancy.

(II) How the first DCI format and/or the second DCI format support(s) cell dormancy indication per secondary cell, including whether simultaneous cell (PDSCHs and/or PUSCHs of a cell) scheduling is supported, shall be described below.

In this implementation, the first DCI format and/or the second DCI format may include the first information field, and one bit of the first information field and/or one or more fifth information fields in the first DCI format corresponds to one Scell. In other words, not only the first information field is used to indicate Scell dormancy, but also the first information field and one or more fifth information fields may jointly indicate Scell dormancy, or, the first information field is reserved, and one or more fifth information fields may jointly indicate Scell dormancy. In other words, one or more fifth information fields may be used to indicate Scell dormancy in addition to its own indication function described above.

In some embodiments, the first information field and/or the one or more fifth information fields include(s)/provide(s) a second bitmap, each bit in the second bitmap corresponding respectively to one Scell. MSB to LSB of the first information field and/or one or more other information fields or the second bitmap correspond(s) to Scells with lowest to highest Scell indices in an ascending order of Scell indices. The Scells to which the second bitmap correspond include an Scell configured with a dormant BWP and/or a dormancy group ID, and/or, an Scell that is not configured with a dormant BWP and/or a dormancy group ID. The number of bits included in the second bitmap is determined by the number of the Scells. The number of the Scells refers to the number of Scells configured with a dormant BWP and/or a dormancy group ID (only Scells configured with a dormant BWP and/or a dormancy group ID are included), or refers to the number of configured Scells (Scells are included, whatever they are configured with a dormant BWP and/or a dormancy group ID). The cell (the first cell) used to transmit the DCI format and the Scell belong to identical or different cell groups and/or identical or different PUCCH groups. The cell group includes an MCG and/or an SCG, that is, it is assumed that they belong to identical cell groups, i.e. they all belong to the MCG or all belong to the SCG.

In some embodiments, a part of or all bits of the information fields among the first information field and/or in the one or more fifth information fields constitute/provide the second bitmap. For example, the part of or all bits in the information fields are taken from former to later as bits from MSB to LSB in the second bitmap according to positions (or an order of listing) of the part or all bits in the information fields and/or positions (or an order of listing) of the information fields in a corresponding DCI format. For example, the bits of the second bitmap from MSB to LSB successively include {MSB to LSB in an MCS field for TB1, MSB to LSB in an NDI field for TB1, MSB to LSB in an RV field for TB1, MSB to LSB in an HARQ process number field, MSB to LSB of an antenna port field, MSB to LSB of DMRS sequence initialization}. For another example, they successively include {MSB to LSB in the MCS field for TB1, MSB to LSB in the NDI field for TB1, MSB to LSB in the RV field for TB1, MSB to LSB of the HARQ process number field, MSB to LSB in the first information field}. For a further example, they successively include {MSB to LSB of information block 1 in the MCS field for TB1, MSB to LSB of information block 1 in the NDI field for TB1, MSB to LSB of information block 1 in the RV field for TB1, MSB to LSB of the HARQ process number field, MSB to LSB in the first information field}.

In some embodiments, when a value of a bit of the second bitmap is 0, an active DL BWP (provided by the fifth higher layer parameter) is indicated for a UE corresponding to an active SCell; for a value of a bit of the second bitmap is 1, when a current active DL BWP is a dormant DL BWP, an active DL BWP (provided by the sixth higher layer parameter) is indicated for the UE corresponding to the active SCell; and when the current active DL BWP is not a dormant DL BWP, the current active DL BWP is indicated for the UE corresponding to the active SCell. The terminal equipment sets the active DL BWP to be the indicated active DL BWP.

In this implementation, the first DCI format and/or the second DCI format do/does not include a sixth information field (one-shot HARQ-ACK request), or bits in a sixth information field included in the first DCI format and/or the second DCI format are set to be a first specific value, the first specific value including 0, that is, in this implementation, all bits in the sixth information field are set be to 0.

In this implementation, implementation of the second information field shall be described below. That bits in the second information field in the first DCI format and/or the second DCI format are set to be a second specific value includes that: all bits of one or more first information blocks in the second information field are respectively set to be 0 or 1. All bits of a first information block corresponding to a cell configured with a first resource allocation type (resource allocation type 0) are set to be the second specific value, the second specific value being 0, all bits of a first information block corresponding to a cell configured with a second resource allocation type (resource allocation type 1) are set to be the second specific value, the second specific value being 1, and all bits of a first information block of a cell configured with a dynamic switch resource allocation type (that is, it is indicated by DCI that resource allocation type 1 or 0 is used) are set to be the second specific value, the second specific value being 0 or 1. One or more first information blocks in the second information field include all or a part of the information blocks in the second information field, or, the above one or more first information blocks include at least one information block or at least two information blocks in the second information field.

For example, when the above one or more first information blocks are all (each) of the information blocks of the second information field, the first DCI format and/or the second DCI format do/does not support simultaneously scheduling cells, and when the above one or more first information blocks are a part of the information blocks (at least one information block or at least two information blocks, such as including a first one of the information blocks) in the second information field, simultaneously scheduling cells (scheduling by using remaining second information blocks) may be supported. That is, the second information field further includes a second information block, bits in one or more second information blocks in the second information field being not set to be the second specific value, and/or, second information blocks in the second information field being used to provide information for scheduling PDSCHs. One or more second information blocks in the second information field include information blocks other than the one or more first information blocks in the second information field.

How to indicate SCell dormancy by the second bitmap by using the first information field and/or one or more fifth information fields shall be described below.

In some embodiments, specific compositions of the first information field and the fifth information field are as described above, which shall not be repeated herein any further. The modulation coding scheme and/or the new data indicator and/or the redundancy version are for a first transport block (TB1) and/or a second transport block (TB2). Wherein, for the fifth information field including one or more information blocks (such as whether the modulation coding scheme and/or the new data indicator and/or the redundancy version and/or the HARQ process number, an antenna port includes information blocks is dependent on a configuration, and other fifth information fields include information blocks by default), one bit of one or more third information blocks in the fifth information field corresponds to one Scell. Wherein, the one or more third information blocks include all or a part of the information blocks of the fifth information field. Wherein, the one or more third information blocks include former $N_2$ information blocks in the fifth information field and/or latter $N_3$ information blocks in the fifth information field, or include an $N_4$*-th* information block in the fifth information field, or include an information block in the fifth information field corresponding to the first information block in the second information field.

In this embodiment, the corresponding information block refers to that a third information block corresponds to a first information block in the second information field, and/or corresponds together with a first information block in the second information field to identical cell, and/or has the same sequence number as a first information block in the second information field.

In some embodiments, the fifth information field further includes fourth information blocks, wherein one or more of the fourth information blocks are not used to indicate Scell dormancy, and/or all (any) bits in the fourth information block in the fifth information field do not correspond to an Scell, and/or, the fourth information blocks in the fifth information field are used to provide information for scheduling PDSCHs. The one or more fourth information blocks include information blocks other than the one or more third information blocks in the fifth information field.

In some embodiments, the number of the third information blocks in the fifth information field is identical to or different from the number of the first information blocks in the second information field, and the number of the information blocks in the fifth information field is identical to or different from the number of the information blocks in the second information field.

Implementations of information fields indicating SCell dormancy per SCell shall be respectively illustrated below.

In some embodiments, for the second DCI format, the first transport block and/or the second transport block is/are involved or not involved.

Example 1: the first DCI format does not include the sixth information field (one-shot HARQ-ACK request), or bits in the sixth information field included in the first DCI format are set to be 0, and all bits of each information block (all first information blocks, excluding the second information blocks) in the second information field: all bits of the first information block corresponding to the cell configured with a resource allocation type 0 are set to be 0, all bits of the first information block corresponding to the cell configured with a second resource allocation type (resource allocation type 1) are set to be 1, and all bits of the first information block corresponding to the cell configured with the dynamic switch resource allocation type are set to be the second specific value or 0 or 1, at this time, the first information field is present (reserved, but is not used to indicate SCell dormancy). The fifth information field (the modulation coding scheme and/or the new data indicator and/or the redundancy version) corresponding to the first transport block, the antenna port and the DMRS sequence initialization are used to indicate SCell dormancy and constitute the second bitmap, each bit in the second bitmap corresponding to one Scell. MSB to LSB of the second bitmap corresponds to Scells with lowest Scell index to the highest Scell index in an ascending order of Scell indices.

Example 2: the first DCI format does not include the sixth information field (one-shot HARQ-ACK request), or the bits in the sixth information field included in the first DCI format are set to be 0, and in all bits of each information block (all first information blocks, excluding the second information block) in the second information field: all bits of the first information block corresponding to the cell configured with resource allocation type 0 are set to be 0, all bits of the first information block corresponding to the cell configured with the second resource allocation type (resource allocation type 1) are set to be 1, and all bits of the first information block corresponding to the cell configured with the dynamic switch resource allocation type are set to be the second specific value or 0 or 1, and at this time, the first information field is present (reserved, but is not used to indicate SCell dormancy). A first one of information blocks (the third information block $N_2$= 1, $N_4$=1) of the fifth information field with multiple information blocks (such as the modulation coding scheme and/or the new data indicator and/or the redundancy version) is used to indicate SCell dormancy, and is cascaded to constitute a second bitmap. One bit in the second bitmap corresponds to one Scell. MSB to LSB of the second bitmap corresponds to Scells with lowest Scell index to the highest Scell index in an ascending order of Scell indices.

In the above examples 1 and 2, simultaneous cell scheduling is not supported, that is, the first DCI format and/or the second DCI format do/does not support scheduling one or more cells.

Example 3: the first DCI format and/or the second DCI format include(s) a third information field, the third information field indicating at least two scheduled cells, and all bits in at least one information block (e.g. including but not limited to first one of information blocks) in the second information field: all bits of the first information block corresponding to the cell configured with resource allocation type 0 are set to be 0, all bits of the first information block corresponding to the cell configured with resource allocation type 1 are set to be 1, and all bits of the first information block corresponding to the cell configured with the dynamic switch resource allocation type are set to be the second specific value or 0 or 1, and at this time, the first information field is present (reserved, but is not used to indicate SCell dormancy). At least one of the following first information field and/or the fifth information field is used to indicate SCell dormancy (the third information blocks are cascaded to constitute the second bitmap):

a modulation coding scheme (1) of the first transport block
a new data indicator of the first transport block (2)
a redundancy version (if any) of the first transport block (3)
an HARQ process number (4)
an antenna port (5)
DMRS sequence initialization (6)
a first information block (7)

Wherein, for (1)-(4), the information block (third information block) therein corresponding to at least one information block (first information block) in the second information field is used for SCell dormancy indication. For example, other information blocks (if any, the fourth information blocks) are respectively used to provide information for scheduling PDSCHs in cells to which other information blocks (the second information blocks) in the second information field correspond. Wherein, for (3), one or more information blocks therein corresponding to at least one information block in the second information field may possibly include 0 bit respectively (whether the information blocks in the information field only include 0 bit is dependent on configurations), in which case it may also be said that the fifth information field or the one or more information blocks (the fourth information blocks) is/are not used for SCell dormancy indication.

For (5), when it is configured as Type 2, it is identical to implementations of above (1)-(4). When it is configured as Type-1a, the field is used for SCell dormancy indication. For PDSCHs scheduled in cells to which other information blocks (the second information blocks) in the second information field correspond, predefined antenna ports are used (for example, a default value is assumed; however, it is not limited thereto).

For (6), the information field is used for SCell dormancy indication. For PDSCHs scheduled in cells to other information blocks (the second information blocks) in the second information field correspond, it is assumed that the DMRS sequence initialization is 0 or 1.

For (7), all or a part of bits in the information field are used for SCell dormancy indication.

Example 4: the first DCI format and/or the second DCI format include(s) the third information field, the third information field indicating at least three scheduled cells. When all bits in at least two (this is to ensure that the following information field also has at least two information blocks to indicate Scell dormancy, and the number of bits is sufficient) information blocks (e.g. the first information block includes former two information blocks; however, it is not limited thereto): all bits of the first information block corresponding to the cell configured with resource allocation type 0 are set to be 0, all bits of the first information block corresponding to the cell configured with the second resource allocation type (resource allocation type 1) are set to be 1, and all bits of the first information block corresponding to the cell configured with the dynamic switch resource allocation type are set to be the second specific value, 0 or 1, and at this time, the first information field is present (reserved, but is not used to indicate SCell dormancy). At least one of the following first information field and/or the fifth information field is used to indicate SCell dormancy (the third information blocks are cascaded to constitute the second bitmap):

a modulation coding scheme (1) of the first transport block
a new data indicator of the first transport block (2)
a redundancy version (if any) of the first transport block (3)
an HARQ process number (4)
a first information block (7)

Wherein, for (1)-(4), the information blocks (the third information blocks) therein corresponding to at least two information blocks (first information blocks) in the second information field are used for SCell dormancy indication. For example, other information blocks (if any, the fourth information blocks) are respectively used to provide information for scheduling PDSCHs in cells to which other information blocks (the second information blocks) in the second information field correspond.

For (7), all or a part of bits in the information field are used for SCell dormancy indication.

Example 5: the first DCI format and/or the second DCI format do/does not include the third information field, and the third higher layer parameter and/or fourth higher layer parameter for the scheduled cell set include(s) only one entry. Implementation of example 3 or 4 may be adopted.

Example 6: the third higher layer parameter and/or fourth higher layer parameter for the scheduled cell set is/are not configured. The method in Example 1 or 2 may be used (PDSCHs are unable to be scheduled simultaneously).

Currently, as more than 10 (e.g. 15) Scells may possibly be configured in an MCG or an SCG respectively, the same number of information bits may be required if indication per Scell is performed. For existing DCI format 1_1, as an original purpose of introducing the DCI format is to schedule a cell, information fields or information bits included in the DCI format are also designed for this purpose. When this DCI format is used for Scell dormancy indication per Scell, information bits originally related to scheduling PDSCHs will have to be used. These information bits are unable to perform indication related to scheduling PDSCHs. As a result, if DCI format 1_1 is used for Scell dormancy indication per Scell, DCI format 1_1 is unable to schedule PDSCHs simultaneously.

In the embodiments of this disclosure, a purpose of introducing the first DCI format and the second DCI format is to be able to support scheduling multiple (2 or more) cells, and that the first DCI format and the second DCI format include information fields or information bits is also designed for this purpose (for example, some information fields include multiple information blocks, which provide information on PDSCHs scheduled for different cells). When the first DCI format and the second DCI format are used for Scell dormancy indication per Scell, Scell dormancy and PDSCH scheduling per Scell may be performed simultaneously via above example 3 or 4 or 5, that is, a first DCI format and a second DCI format, thereby improving resource efficiency.

In some embodiments, when a first DCI format and a second DCI format may simultaneously perform Scell dormancy and PDSCH/PUSCH scheduling per Scell, such as in above example 3 or 4 or 5, the scheduled PDSCH/PUSCH is/are also limited, and reference may be made to the implementation in (I). For example, the first DCI format and/or the second DCI format only schedule(s) PDSCHs and/or PUSCHs of the first cell and/or the second cell, and the second cell includes a Pcell and/or a PScell and/or an SpCell and/or a primary cell cell and/or a PUCCH Scell and/or an Scell not configured with a dormant BWP and/or a dormancy group ID and/or a cell not configured with a dormant BWP and/or a dormancy group ID and/or a cell not indicated by the second bitmap in the first DCI format and/or the second DCI format as being dormant. Or, the first DCI format and/or the second DCI format schedule(s) PDSCHs and/or PUSCHs of a third cell, the third cell including a cell indicated by the second bitmap as being dormant and/or a cell configured with a dormant BWP and/or a dormancy group ID.

The steps or processes related to this disclosure are only described above; however, this disclosure is not limited thereto. The method of the embodiments of this disclosure may also include other steps or processes, and reference may be made to relevant techniques for specific contents of these steps or processes.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

An advantage of the embodiments of this disclosure exists in that (supporting) indicating SCell dormancy by DCI format which supports to schedule multiple cells by single DCI, and simultaneously scheduling cells or nonsimultaneously scheduling cells is also supported, thereby saving power consumption of the terminal equipment and improving resource efficiency while achieving multi-carrier enhancement.

Embodiments of a second aspect

The embodiments of this disclosure provide an information transmission method, which shall be described from a network device side, with contents identical to those in the embodiments of the first aspect being not going to be described herein any further.

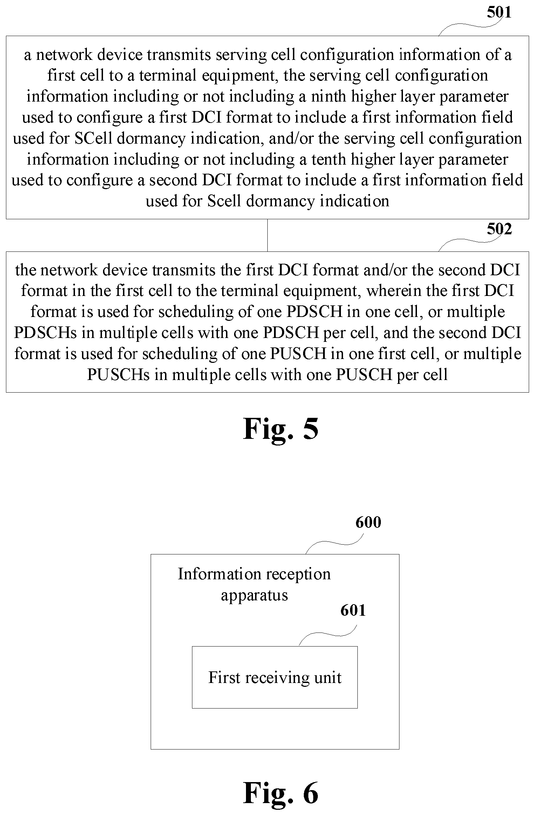

FIG. 5 is a schematic diagram of the information transmission method of the embodiments of this disclosure. As shown in FIG. 5, the method includes:

501: a network device transmits serving cell configuration information of a first cell to a terminal equipment, the serving cell configuration information including or not including a ninth higher layer parameter used to configure a first DCI format to include a first information field used for SCell dormancy indication, and/or the serving cell configuration information including or not including a tenth higher layer parameter used to configure a second DCI format to include a first information field used for Scell dormancy indication; and

502: the network device transmits the first DCI format and/or the second DCI format in the first cell to the terminal equipment, wherein the first DCI format is used for scheduling of one PDSCH in one cell, or multiple PDSCHs in multiple cells with one PDSCH per cell, and the second DCI format is used for scheduling of one first PUSCH in one cell, or multiple PUSCHs in multiple cells with one PUSCH per cell.

It should be noted that FIG. 5 only schematically illustrates the embodiments of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 5.

The steps or processes related to this disclosure are only described above; however, this disclosure is not limited thereto. The method of the embodiments of this disclosure may also include other steps or processes, and reference may be made to relevant techniques for specific contents of these steps or processes.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

Embodiments of a third aspect

The embodiments of this disclosure provide an information reception apparatus. The apparatus may be, for example, a terminal equipment, or one or some components or assemblies configured in the terminal equipment, with contents identical to those in the embodiments of the first aspect being not going to be described herein any further.

FIG. 6 is a schematic diagram of the information reception apparatus of the embodiments of this disclosure. As shown in FIG. 6, the information reception apparatus 600 includes:

a first receiving unit 601 configured to receive serving cell configuration information of a first cell, the serving cell configuration information including or not including a ninth higher layer parameter used to configure a first DCI format to include a first information field used for Scell dormancy indication, and/or the serving cell configuration information including or not including a tenth higher layer parameter used to configure a second DCI format to include a first information field used for SCell dormancy indication,

and receive the first DCI format and/or the second DCI format in the first cell, wherein the first DCI format is used for scheduling of one PDSCH in one cell, or multiple PDSCHs in multiple cells with one PDSCH per cell, and the second DCI format is used for scheduling of one PUSCH in one first cell, or multiple PUSCHs in multiple cells with one PUSCH per cell.

In some embodiments, reference may be made to the embodiments of the first aspect for implementation of the first receiving unit 601, which shall not be described herein any further.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the information transmission apparatus 600 may further include other components or modules, and reference may be made to related techniques for particulars of these components or modules.

Furthermore, for the sake of simplicity, connection relationships between the components or modules or signal profiles thereof are only illustrated in FIG. 6. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

Embodiments of a fourth aspect

The embodiments of this disclosure provide an information transmission apparatus. The apparatus may be, for example, a network device, or one or some components or assemblies configured in the network device, with contents identical to those in the embodiments of the second aspect being not going to be described herein any further.

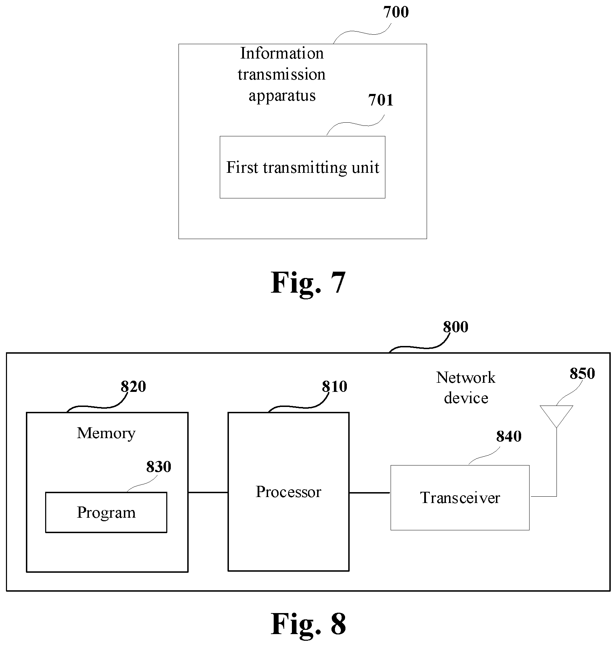

FIG. 7 is a schematic diagram of the information transmission apparatus of the embodiments of this disclosure. As shown in FIG. 7, the information transmission apparatus 700 includes:

a first transmitting unit 701 configured to transmit serving cell configuration information of a first cell to a terminal equipment, the serving cell configuration information including or not including a ninth higher layer parameter used to configure a first DCI format to include a first information field used for Scell dormancy indication, and/or the serving cell configuration information including or not including a tenth higher layer parameter used to configure a second DCI format to include a first information field used for Scell dormancy indication,

and transmit the first DCI format and/or the second DCI format in the first cell to the terminal equipment, wherein the first DCI format is used for scheduling of one PDSCH in one cell, or multiple PDSCHs in multiple cells with one PDSCH per cell, and the second DCI format is used for scheduling of one PUSCH in one first cell, or multiple PUSCHs in multiple cells with one PUSCH per cell.

In some embodiments, reference may be made to the embodiments of the first aspect for implementation of the first transmitting unit 701, which shall not be described herein any further.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the information transmission apparatus 700 may further include other components or modules, and reference may be made to related techniques for particulars of these components or modules.

Furthermore, for the sake of simplicity, connection relationships between the components or modules or signal profiles thereof are only illustrated in FIG. 7. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

Embodiments of a fifth aspect

The embodiments of this disclosure provide a communication system, and reference may be made to FIG. 1, with contents identical to those in the embodiments of the first to fourth aspects being not going to be described herein any further.

In some embodiments, the communication system 100 may at least include a network device 101 and/or a terminal equipment 102, wherein the network device 101 includes the information transmission apparatus 700 in the embodiments of the fourth aspect, and the terminal equipment 102 includes the information reception apparatus 600 in the embodiments of the third aspect, which shall not be described herein any further.

The embodiments of this disclosure further provide a network device, which may be, for example, a base station. However, this disclosure is not limited thereto, and it may also be another network device.

FIG. 8 is a schematic diagram of a structure of the network device of the embodiments of this disclosure. As shown in FIG. 8, the network device 800 may include a processor 810 (such as a central processing unit (CPU)) and a memory 820, the memory 820 being coupled to the processor 810. Wherein, the memory 820 may store various data, and furthermore, it may store a program 830 for information processing, and execute the program 830 under control of the processor 810.

For example, the processor 810 may be configured to execute a program to carry out the information transmission method described in the embodiments of the first aspect.

Furthermore, as shown in FIG. 8, the network device 800 may include a transceiver 840, and an antenna 850, etc. Wherein, functions of the above components are similar to those in the related art, and shall not be described herein any further. It should be noted that the network device 800 does not necessarily include all the parts shown in FIG. 8, and furthermore, the network device 800 may include parts not shown in FIG. 8, and the related art may be referred to.

The embodiments of this disclosure further provide a terminal equipment; however, this disclosure is not limited thereto, and it may also be another equipment.

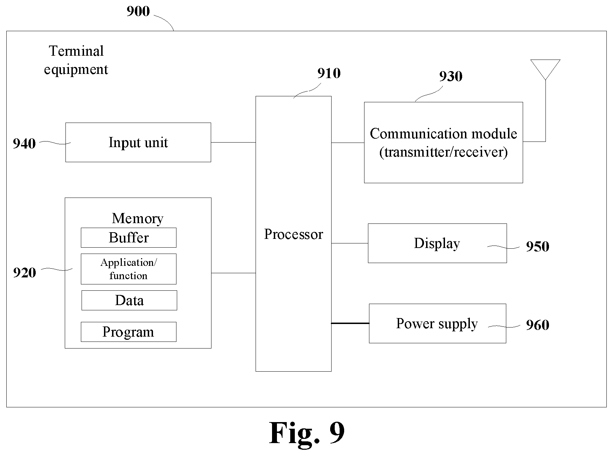

FIG. 9 is a schematic diagram of the terminal equipment of the embodiments of this disclosure. As shown in FIG. 9, the terminal equipment 900 may include a processor 910 and a memory 920, the memory 920 storing data and a program and being coupled to the processor 910. It should be noted that this figure is illustrative only, and other types of structures may also be used, so as to supplement or replace this structure and achieve a telecommunications function or other functions.

For example, the processor 910 may be configured to execute a program to carry out the information reception method as described in the embodiments of the second aspect.

As shown in FIG. 9, the terminal equipment 900 may further include a communication module 930, an input unit 940, a display 950, and a power supply 960; wherein functions of the above components are similar to those in the related art, which shall not be described herein any further. It should be noted that the terminal equipment 900 does not necessarily include all the parts shown in FIG. 9, and the above components are not necessary. Furthermore, the terminal equipment 900 may include parts not shown in FIG. 9, and the related art may be referred to.

Embodiments of this disclosure provide a computer program, which, when executed in a terminal equipment, will cause the terminal equipment to carry out the information reception method as described in the embodiments of the second aspect.

Embodiments of this disclosure provide a storage medium, including a computer program, which will cause a terminal equipment to carry out the information reception method as described in the embodiments of the second aspect.

Embodiments of this disclosure provide a computer program, which, when executed in a network device, will cause the network device to carry out the information transmission method as described in the embodiments of the first aspect.

Embodiments of this disclosure provide a storage medium, including a computer program, which will cause a network device to carry out the information transmission method as described in the embodiments of the first aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principle of the present disclosure, and such variants and modifications fall within the scope of the present disclosure.

As to implementations containing the above embodiments, following supplements are further disclosed.

1. An information reception method, applicable to a terminal equipment, characterized in that the method includes:

   receiving serving cell configuration information of a first cell, the serving cell configuration information including or not including a ninth higher layer parameter used to configure a first DCI format to include a first information field used for Scell dormancy indication, and/or the serving cell configuration information including or not including a tenth higher layer parameter used to configure a second DCI format to include a first information field used for Scell dormancy indication; and

   receiving the first DCI format and/or the second DCI format in the first cell, wherein the first DCI format is used for scheduling of one PDSCH in one cell, or multiple PDSCHs in multiple cells with one PDSCH per cell, and the second DCI format is used for scheduling of one PUSCH in one first cell, or multiple PUSCHs in multiple cells with one PUSCH per cell.

2. The method according to supplement 1, wherein the first DCI format is DCI format 1_3, and the second DCI format is DCI format 0_3.

3. The method according to supplement 1 or 2, wherein the first information field is an Scell dormancy indication.

4. The method according to any one of supplements 1-3, wherein the serving cell configuration information includes an eighth higher layer parameter for configuring the terminal equipment to monitor and/or receive the first DCI format and/or the second DCI format in the first cell.

5. The method according to supplement 4, wherein the eighth higher layer parameter is included in search space information in the serving cell configuration information.

6. The method according to any one of supplements 1-5, wherein a CRC of the first DCI format and/or the second DCI format is scrambled by a C-RNTI or an MCS-C-RNTI.

7. The method according to any one of supplements 1-6, wherein the first DCI format and/or the second DCI format include(s) a second information field used for indicating frequency domain resource assignment.

8. The method according to supplement 7, wherein the second information field is frequency domain resource assignment

9. The method according to any one of supplements 1-8, wherein the first DCI format and/or the second DCI format include(s) or does/do not include a third information field used for indicating scheduled cells.

10. The method according to supplement 9, wherein the third information field is a scheduled cells indicator.

11. The method according to supplement 9 or 10, wherein the third information field indicates scheduled cells from a scheduled first cell and/or a scheduled second cell.

12. The method according to any one of supplements 1-11, wherein the first DCI format and/or the second DCI format further include(s) or does/do not include a fourth information field used for indicating a scheduled first cell set and/or a scheduled second cell set.

13. The method according to supplement 9, wherein the fourth information field is a scheduled cell set indicator.

per Scell group

14. The method according to any one of supplements 1-13, wherein the first DCI format and/or the second DCI format include(s) the first information field, one bit of the first information field corresponding to one Scell group and/or one dormancy group ID.

15. The method according to supplement 14, wherein the first DCI format and/or the second DCI format indicate(s) Scell dormancy by using the first information field only.

16. The method according to supplement 14 or 15, wherein the first information field includes a first bitmap, each bit in the first bitmap corresponding to one Scell group and/or one dormancy group ID respectively.

17. The method according to supplement 16, wherein MSB to LSB of the first information field or the first bitmap corresponds to a first Scell group to a last Scell group in an ascending order of dormancy group IDs.

18. The method according to any one of supplements 14-17, wherein the number of bits of the first information field or the first bitmap is determined by the number of Scell groups and/or the number of dormancy group ID(s).

19. The method according to any one of supplements 14-18, wherein the first cell and Scell(s) in the Scell group belong to identical or different cell groups and/or identical or different PUCCH groups.

20. The method according to supplement 19, wherein the cell group includes an MCG and/or an SCG.

Scheduling while indicating dormancy

21. The method according to any one of supplements 14-20, wherein the first DCI format and/or the second DCI format only schedule(s) the first cell and/or the second cell, and the second cell includes a Pcell and/or a PScell and/or an SpCell and/or a primary cell and/or a PUCCH Scell and/or an Scell not configured with a dormant BWP and/or a dormancy group ID and/or a cell not configured with a dormant BWP and/or a dormancy group ID and/or a cell that is not indicated as being dormant by the first information field in the first DCI format and/or the second DCI format.

22. The method according to supplement 1 or 21, wherein the cell scheduled by the first DCI format and/or the second DCI format is indicated by the second information field and/or the third information field in the first DCI format and/or the second DCI format.

23. The method according to supplement 1 or 21, wherein the second information field of the first DCI format and/or the second DCI format includes $N_{cell}^{DL}$ or $N_{cell}^{UL}$ information blocks; where, $N_{cell}^{DL}$ or $N_{cell}^{UL}$ is the number of cells in the scheduled first cell set and/or second cell set, or, $N_{cell}^{DL}$ or $N_{cell}^{UL}$ is the number of scheduled cells indicated by the third information field, or, $N_{cell}^{DL}$ or $N_{cell}^{UL}$ is the number of scheduled cells configured by the third higher layer parameter and/or the fourth higher layer parameter.

24. The method according to supplement 1 or 21, wherein the second information field of the first DCI format and/or the second DCI format is further used to indicate a scheduled cell and/or an unscheduled cell, the scheduled cell indicated by the second information field including only the first cell and/or the second cell, and/or, the second information field indicates that the scheduled first cell set, and/or, the scheduled cell indicated by the third information field or a cell other than the first cell and/or the second cell in the scheduled cell configured by the third higher layer parameter and/or the fourth higher layer parameter is not scheduled.
25. The method according to any one of supplements 1 or 21-24, wherein the first DCI format and/or the second DCI format further include(s) a third information field, a cell indicated by the third information field including only the first cell and/or the second cell.
26. The method according to supplement 25, wherein the third information field indicates the scheduled cell from the scheduled first cell set and/or second cell set.
27. The method according to supplement 23 or 26, wherein the scheduled first cell set is configured by the first higher layer parameter or indicated by the fourth information field in the first DCI format, and the scheduled second cell set is configured by the second higher layer parameter or indicated by the fourth information field in the second DCI format.
28. The method according to any one of supplements 1 or 21-27, wherein the first DCI format and/or the second DCI format further include(s) a fourth information field, a first cell set and/or a second cell set indicated by the fourth information field including the first cell and/or the second cell.
29. The method according to supplement 21, wherein the dormant BWP is configured by a fifth higher layer parameter, and the dormancy group ID is configured by a seventh higher layer parameter and/or a fifteenth higher layer parameter.
30. The method according to supplement 14, wherein the cell scheduled by the first DCI format and/or the second DCI format includes a third cell, the third cell including a cell indicated as being dormant by the first information field and/or a cell configured with a dormant BWP and/or a dormancy group ID.
31. The method according to supplement 1 or 30, wherein the cell scheduled by the first DCI format and/or the second DCI format is configured by the first higher layer parameter and/or the second higher layer parameter and/or indicated by the second information field and/or the third information field in the first DCI format and/or the second DCI format.
32. The method according to supplement 31, wherein for an information field including one or more information blocks in the first DCI format and/or the second DCI format, information block to which the third cell corresponds is set to be invalid value or default value and/or is reserved and/or is ignored by the terminal equipment.
33. The method according to supplement 21, wherein the first DCI format and/or the second DCI format do/does not schedule a cell.

per Scell

34. The method according to supplement 1, wherein the first DCI format and/or the second DCI format include(s) the first information field, and one bit in the first information field and/or one or more fifth information fields in the first DCI format corresponds to one Scell.
35. The method according to supplement 34, wherein the fifth information field is used for Scell dormancy indication.
36. The method according to supplement 34 or 35, wherein the first information field and/or the one or more fifth information fields include(s) a second bitmap, each bit in the second bitmap corresponding to one Scell respectively.
37. The method according to supplement 36, wherein MSB to LSB of the first information field and/or one or more other information fields or the second bitmap correspond(s) to Scells with lowest to highest Scell indices in an ascending order of Scell indices.
38. The method according to supplement 36, wherein the number of bits included in the second bitmap is determined by the number of Scells.
39. The method according to any one of supplements 34-38, wherein the first cell and the Scells belong to identical or different cell groups, and/or, identical or different PUCCH groups.
40. The method according to supplement 39, wherein the cell groups include an MCG and/or an SCG.
41. The method according to any one of supplements 34-40, wherein the Scell is configured with a dormant BWP and/or a dormancy group ID, is not configured with a dormant BWP and/or a dormancy group ID.
42. The method according to any one of supplements 34-41, wherein the number of the Scells refers to the number of Scells configured with a dormant BWP and/or a dormancy group ID, or refers to the number of configured Scells.

About a bit value of a one-shot HARQ-ACK request

43. The method according to any one of supplements 34-42, wherein the first DCI format and/or the second DCI format do/does not include a sixth information field, or bits in a sixth information field included in the first DCI format and/or the second DCI format are set to be a first specific value.

44. The method according to supplement 34 or 43, wherein the sixth information field includes a one-shot HARQ-ACK request, and all bits in the sixth information field are set to be 0.

About a bit value of FRDA

45. The method according to any one of supplements 34-44, wherein bits in the second information field in the first DCI format and/or the second DCI format are set to be a second specific value.

46. The method according to supplement 45, wherein that bits in the second information field are set to be a second specific value includes that: all bits of one or more first information blocks in the second information field are respectively set to be 0 or 1.

47. The method according to supplement 46, wherein all bits of a first information block corresponding to a cell configured with a first resource allocation type are set to be 0, all bits of a first information block corresponding to a cell configured with a second resource allocation type are set to be 1, and all bits of a first information block of a cell configured with a dynamic switch resource allocation type are set to be 0 or 1.

48. The method according to supplement 46 or 47, wherein one or more first information blocks in the second information field include all or a part of the information blocks in the second information field.

49. The method according to supplement 46 or 47, wherein the one or more first information blocks in the second information field include at least one information block or at least two information blocks in the second information field.

50. The method according to any one of supplements 45-49, wherein bit(s) in one or more second information blocks in the second information field are not set to be the second specific value, and/or, second information blocks in the second information field are used to provide information for scheduling PDSCHs or PUSCHs.

51. The method according to supplement 50, wherein the one or more second information blocks in the second information field include information blocks other than the one or more first information blocks in the second information field.

About how to use bits in the fifth information field including information blocks

52. The method according to any one of supplements 34-51, wherein the one or more fifth information fields include:

one or more of a modulation coding scheme, a new data indicator, a redundancy version, HARQ process number, antenna ports, and DMRS sequence initialization.

53. The method according to supplement 52, wherein the modulation coding scheme and/or the new data indicator and/or the redundancy version are for a first transport block and/or a second transport block.

54. The method according to any one of supplements 34-52, wherein for the fifth information field including one or more information blocks, one bit in one or more third information blocks in the fifth information field corresponds to one Scell.

55. The method according to supplement 54, wherein the one or more third information blocks include all or a part of information blocks of the fifth information field.

56. The method according to supplement 54 or 55, wherein the one or more third information blocks include former $N_2$ information blocks in the fifth information field and/or latter $N_3$ information blocks in the fifth information field, or include an $N_4$*-th* information block in the fifth information field, or include an information block in the fifth information field corresponding to the first information block in the second information field.

57. The method according to supplement 54 or 55 or 56, wherein one third information block corresponds to one first information block in the second information field, and/or corresponds together with a first information block in the second information field to identical cells, and/or has the same sequence number as a first information block in the second information field.

58. The method according to any one of supplements 54-57, wherein one or more of the fourth information blocks in the fifth information field are not used to indicate Scell dormancy, and/or all bits in the fourth information block in the fifth information field do not correspond to an Scell, and/or, the fourth information blocks in the fifth information field are used to provide information for scheduling PDSCHs.

59. The method according to supplement 58, wherein the one or more fourth information blocks include information blocks other than the one or more third information blocks in the fifth information field.

60. The method according to any one of supplements 54-59, wherein the number of the third information blocks in the fifth information field is identical to or different from the number of the first information blocks in the second information field.

61. The method according to any one of supplements 54-60, wherein the number of the information blocks in the fifth information field is identical to or different from the number of the information blocks in the second information field.

62. The method according to any one of supplements 1-61, wherein the first cell is a Pcell or a PScell or a primary cell or an SpCell or a PUCCH Scell or an Scell.

63. The method according to supplement 62, wherein when the first cell is a PUCCH cell or an Scell, the serving cell configuration information does not include the ninth higher layer parameter and/or the tenth higher layer parameter, or the ninth higher layer parameter and/or the tenth higher layer parameter included in the serving cell configuration information of the first cell is/are ignored by the terminal equipment.

64. The method according to supplement 1 or 62, wherein the first DCI format is used to schedule PDSCH(s) in one or more cells in the first cell set, the second DCI format is used to schedule PUSCH(s) in one or more cells in the second cell set, the first cell set is configured by a first higher layer parameter, and the second cell set is configured by a second higher layer parameter.

65. The method according to any one of supplements 1-64, wherein the ninth higher layer parameter and/or the tenth higher layer parameter is/are included in search space information in the serving cell configuration information or cross-carrier scheduling configuration information.

66. The method according to any one of supplements 1-65, wherein the ninth higher layer parameter and/or the tenth higher layer parameter is/are optionally present or not present.

67. The method according to supplement 66, wherein the first cell is a Pcell and/or a PScell and/or an SpCell and/or a primary cell and/or a PUCCH Scell and/or an Scell that is not configured with a dormant BWP and/or a dormancy group ID and/or a cell that is not configured with a dormant BWP and/or a dormancy group ID, and the ninth higher layer parameter and/or the tenth higher layer parameter is/are optionally present.

68. The method according to supplement 66, wherein the first cell is not a Pcell and/or a PScell and/or an SpCell and/or a primary cell and/or a PUCCH Scell and/or an Scell that is not configured with a dormant BWP and/or a dormancy group ID and/or a cell that is not configured with a dormant BWP and/or a dormancy group ID, and the ninth higher layer parameter and/or the tenth higher layer parameter is/are not present.

69. An information transmission method, applicable to a network device, characterized in that the method includes:

transmitting serving cell configuration information of a first cell to a terminal equipment, the serving cell configuration information including or not including a ninth higher layer parameter used to configure a first DCI format to include a first information field used for SCell dormancy indication, and/or the serving cell configuration information including or not including a tenth higher layer parameter used to configure a second DCI format to include a first information field used for SCell dormancy indication; and

transmitting the first DCI format and/or the second DCI format in the first cell to the terminal equipment, wherein the first DCI format is used for scheduling of one PDSCH in one cell, or multiple PDSCHs in multiple cells with one PDSCH per cell, and the second DCI format is used for scheduling of one PUSCH in one first cell, or multiple PUSCHs in multiple cells with one PUSCH per cell.

70. A terminal equipment, including a memory and a processor, the memory storing a computer program, and the processor being configured to execute the computer program to carry out the method as described in any one of supplements 1-68.

71. A network device, including a memory and a processor, the memory storing a computer program, and the processor being configured to execute the computer program to carry out the method as described in supplement 69.

72. A communication system, characterized in that the communication system includes the terminal equipment as described in supplement 70 and/or the network device as described in supplement 71.

## Claims

1. An information reception apparatus, applicable to a terminal equipment, **characterized in that** the apparatus comprises:

a first receiving unit configured to receive serving cell configuration information of a first cell, the serving cell configuration information comprising or not comprising a ninth higher layer parameter used to configure a first DCI format to comprise a first information field used for SCell dormancy indication, and/or the serving cell configuration information comprising or not comprising a tenth higher layer parameter used to configure a second DCI format to comprise a first information field used for SCell dormancy indication,

and receive the first DCI format and/or the second DCI format in the first cell, wherein the first DCI format is used for scheduling of one PDSCH in one cell, or multiple PDSCHs in multiple cells with one PDSCH per cell, and the second DCI format is used for scheduling of one PUSCH in one first cell, or multiple PUSCHs in multiple cells with one PUSCH per cell.

2. The apparatus according to claim 1, wherein a CRC of the first DCI format and/or the second DCI format is scrambled by a C-RNTI or an MCS-C-RNTI.

3. The apparatus according to claim 1, wherein the first DCI format and/or the second DCI format comprise(s) a second information field for indicating frequency domain resource assignment.

4. The apparatus according to claim 1, wherein the first DCI format and/or the second DCI format further comprise(s) or do/does not comprise a third information field for indicating a scheduled cell.

5. The apparatus according to claim 4, wherein the third information field indicates the scheduled cell from a scheduled first cell set and/or a scheduled second cell set.

6. The apparatus according to claim 1, wherein the first DCI format and/or the second DCI format comprise(s) the first information field, and one bit of the first information field corresponds to one SCell group and/or one dormancy group ID.

7. The apparatus according to claim 6, wherein the first information field comprises a first bitmap, each bit in the first bitmap corresponding to one SCell group and/or one dormancy group ID respectively, and MSB to LSB of the first information field or the first bitmap corresponding to a first SCell group to a last SCell group in an ascending order of dormancy group IDs.

8. The apparatus according to claim 6, wherein the first DCI format and/or the second DCI format only schedule(s) the first cell and/or a second cell, the second cell comprising a PCell and/or a PScell and/or an SpCell and/or a primary cell and/or a PUCCH SCell and/or an SCell not configured with a dormant BWP and/or a dormancy group ID and/or a cell not configured with a dormant BWP and/or a dormancy group ID and/or a cell that is not indicated by the first information field in the first DCI format and/or the second DCI format as a dormant cell.

9. The apparatus according to claim 1, wherein a cell scheduled by the first DCI format and/or the second DCI format is indicated by a second information field and/or a third information field in the first DCI format and/or the second DCI format.

10. The apparatus according to claim 6, wherein a cell scheduled by the first DCI format and/or the second DCI format comprises a third cell, the third cell comprising a cell indicated as dormant by the first information field and/or a cell configured with a dormant BWP and/or a dormancy group ID.

11. The apparatus according to claim 1, wherein the first DCI format and/or the second DCI format comprise(s) the first information field, and one bit of the first information field and/or one or more fifth information fields in the first DCI format corresponds to one SCell.

12. The apparatus according to claim 11, wherein the first information field and/or the one or more fifth information fields comprise(s) a second bitmap, each bit in the second bitmap corresponding to one SCell respectively, and MSB to LSB of the first information field and/or one or more other information fields or the second bitmap corresponds to SCells with a lowest SCell index to a highest SCell index in an ascending order of SCell indices.

13. The apparatus according to claim 11, wherein the first DCI format and/or the second DCI format do/does not comprise a sixth information field, or bits in a sixth information field comprised in the first DCI format and/or the second DCI format are set to be a first specific value, the sixth information field comprising a one-shot HARQ-ACK request, and all bits in the sixth information field being set to be 0.

14. The apparatus according to claim 11, wherein bits in the second information field of the first DCI format and/or the second DCI format are set to be a second specific value.

15. The apparatus according to claim 14, wherein that bits in the second information field are set to be the second specific value comprises that: all bits of one or more first information blocks in the second information field are respectively set to be 0 or 1, the one or more first information blocks in the second information field comprising all or a part of information blocks in the second information field.

16. The apparatus according to claim 15, wherein all bits of a first information block corresponding to a cell configured with a first resource allocation type are set to be 0, all bits of a first information block corresponding to a cell configured with a second resource allocation type are set to be 1, and all bits of a first information block corresponding to a cell configured with a dynamic switch resource allocation type are set to be 0 or 1.

17. The apparatus according to claim 14, wherein bits in one or more second information blocks in the second information field are not set to be the second specific value, and/or a second information block in the second information field is used to provide information for scheduling a PDSCH or a PUSCH.

18. The apparatus according to claim 12, wherein the one or more fifth information fields comprise(s):
one or more of a modulation coding scheme, a new data indicator, a redundancy version, an HARQ process number, an antenna port, a DMRS sequence initialization, and the modulation coding scheme and/or new data indicator and/or redundancy version are for a first transport block and/or a second transport block.

19. The apparatus according to claim 1, wherein the first cell is a PCell or a PScell or a primary cell or an SpCell or a PUCCH SCell or an SCell.

20. An information transmission apparatus, applicable to a network device, **characterized in that** the apparatus comprises:

a first transmitting unit configured to transmit serving cell configuration information of a first cell to a terminal equipment, the serving cell configuration information comprising or not comprising a ninth higher layer parameter used to configure a first DCI format existing/to comprise a first information field used for SCell dormancy indication, and/or the serving cell configuration information comprising or not comprising a tenth higher layer parameter used to configure a second DCI format to comprise a first information field used for SCell dormancy indication,
and transmit the first DCI format and/or the second DCI format in the first cell to the terminal equipment, wherein the first DCI format is used for scheduling of one PDSCH in one cell, or multiple PDSCHs in multiple cells with one PDSCH per cell, and the second DCI format is used for scheduling of one PUSCH in one first cell, or multiple PUSCHs in multiple cells with one PUSCH per cell.

100
101
103
102

Fig. 1

201

a terminal equipment receives serving cell configuration information of a first cell, the serving cell configuration information including or not including a ninth higher layer parameter used to configure a first DCI format to include a first information field used for Scell dormancy indication, and/or the serving cell configuration information including or not including a tenth higher layer parameter used to configure a second DCI format to include a first information field used for Scell dormancy indication

202

the terminal equipment receives the first DCI format and/or the second DCI format in the first cell, wherein the first DCI format is used for scheduling of one PDSCH in one cell, or multiple PDSCHs in multiple cells with one PDSCH per cell, and the second DCI format is used for scheduling of one PUSCH in one first cell, or multiple PUSCHs in multiple cells with one PUSCH per cell

Fig. 2

MC-DCI-SetofCellsToAddModList

MC-DCI-SetofCells 1

setofCellsId

scheduledCell-ListDCI-1-3

ScheduledCell-ListDCI-0-3

scheduledCellCombo-ListDCI-1-3

ScheduledCellCombo 1

ScheduledCellCombo 2

⋮

scheduledCellCombo-ListDCI-0-3

ScheduledCellCombo 1

ScheduledCellCombo 2

⋮

MC-DCI-SetofCells 2

setofCellsId

scheduledCell-ListDCI-1-3

ScheduledCell-ListDCI-0-3

scheduledCellCombo-ListDCI-1-3

ScheduledCellCombo 1

ScheduledCellCombo 2

⋮

scheduledCellCombo-ListDCI-0-3

ScheduledCellCombo 1

ScheduledCellCombo 2

⋮

...

Fig. 3

MC-DCI-SetofCellsToAddModList

MC-DCI-SetofCells 1

setofCellsId

scheduledCell-ListDCI-1-3

ScheduledCell-ListDCI-0-3

scheduledCellCombo-ListDCI-1-3

ScheduledCellCombo 1

ScheduledCellCombo 2

⋮

scheduledCellCombo-ListDCI-0-3

ScheduledCellCombo 1

ScheduledCellCombo 2

⋮

dormancyDCI-1-3

dormancyDCI-0-3

MC-DCI-SetofCells 2

setofCellsId

scheduledCell-ListDCI-1-3

ScheduledCell-ListDCI-0-3

scheduledCellCombo-ListDCI-1-3

ScheduledCellCombo 1

ScheduledCellCombo 2

⋮

scheduledCellCombo-ListDCI-0-3

ScheduledCellCombo 1

ScheduledCellCombo 2

⋮

dormancyDCI-1-3

dormancyDCI-0-3

...

Fig. 4

501

a network device transmits serving cell configuration information of a first cell to a terminal equipment, the serving cell configuration information including or not including a ninth higher layer parameter used to configure a first DCI format to include a first information field used for SCell dormancy indication, and/or the serving cell configuration information including or not including a tenth higher layer parameter used to configure a second DCI format to include a first information field used for Scell dormancy indication

502

the network device transmits the first DCI format and/or the second DCI format in the first cell to the terminal equipment, wherein the first DCI format is used for scheduling of one PDSCH in one cell, or multiple PDSCHs in multiple cells with one PDSCH per cell, and the second DCI format is used for scheduling of one PUSCH in one first cell, or multiple PUSCHs in multiple cells with one PUSCH per cell

**Fig. 5**

600
Information reception apparatus
601
First receiving unit

**Fig. 6**

700
Information transmission apparatus
701
First transmitting unit

Fig. 7

800
Network device
820
810
850
Memory
840
830
Program
Processor
Transceiver

Fig. 8

900
Terminal equipment
910
930
940
Input unit
Communication module (transmitter/receiver)
Memory
Buffer
Application/ function
Data
Program
920
Processor
Display
950
Power supply
960

Fig. 9

**INTERNATIONAL SEARCH REPORT**

International application No.
**PCT/CN2023/113210**

**A. CLASSIFICATION OF SUBJECT MATTER**

H04W72/232(2023.01)i

According to International Patent Classification (IPC) or to both national classification and IPC

**B. FIELDS SEARCHED**

Minimum documentation searched (classification system followed by classification symbols)

IPC:H04W,H04L,H04Q

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: 物理上行共享控制信道, 物理下行共享控制信道, 辅小区, 休眠, 睡眠, 高层参数, 第一信息域, 格式, 调度, 多小区, PUSCH, PDSCH, Scell, dormancy, dormant, DCI, format, schedul+ , Information Field

**C. DOCUMENTS CONSIDERED TO BE RELEVANT**

| Category* | Citation of document, with indication, where appropriate, of the relevant passages | Relevant to claim No. |
|---|---|---|
| Y | WO 2023077387 A1 (FUJITSU LIMITED) 11 May 2023 (2023-05-11)<br>description, paragraphs [0088]-[0203] | 1-20 |
| Y | CN 114071671 A (DATANG MOBILE COMMUNICATIONS EQUIPMENT CO., LTD.) 18 February 2022 (2022-02-18)<br>description, paragraphs [0050]-[0130] | 1-20 |
| A | CN 113473635 A (INTEL CORP.) 01 October 2021 (2021-10-01)<br>entire document | 1-20 |
| A | CN 115347925 A (CHINA MOBILE COMMUNICATION LTD., RESEARCH INSTITUTE et al.) 15 November 2022 (2022-11-15)<br>entire document | 1-20 |
| A | LENOVO. "Feature lead summary #1 on multi-cell PUSCH/PDSCH scheduling with a single DCI"<br>*3GPP TSG RAN WG1 Meeting #112, R1-230XXXX,* 03 March 2023 (2023-03-03),<br>entire document | 1-20 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 April 2024** | **23 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

**INTERNATIONAL SEARCH REPORT**
**Information on patent family members**

International application No.
**PCT/CN2023/113210**

| Patent document cited in search report | | | Publication date (day/month/year) | Patent family member(s) | | | Publication date (day/month/year) |
|---|---|---|---|---|---|---|---|
| WO | 2023077387 | A1 | 11 May 2023 | None | | | |
| CN | 114071671 | A | 18 February 2022 | WO | 2022028121 | A1 | 10 February 2022 |
| | | | | TW | 202207735 | A | 16 February 2022 |
| | | | | EP | 4195787 | A1 | 14 June 2023 |
| | | | | US | 2023292337 | A1 | 14 September 2023 |
| CN | 113473635 | A | 01 October 2021 | None | | | |
| CN | 115347925 | A | 15 November 2022 | None | | | |

Form PCT/ISA/210 (patent family annex) (July 2022)